# EUROPEAN PATENT APPLICATION

(11) **EP 2 374 824 A1**
(43) Date of publication of application: **12.10.2011**
(21) Application number: 09831883.5
(22) Date of filing: 07.12.2009
(51) Int. Cl.: C08F 220/20, C08F 220/26, C08K 5/00, C08L 33/04, G02B 1/04

(54) **RAW-MATERIAL COMPOSITIONS FOR RESIN FOR OPTICAL PART, RESIN FOR OPTICAL PART, AND OPTICAL PART**

(30) Priority: 09.12.2008 JP 2008313616; 18.12.2008 JP 2008322332; 19.12.2008 JP 2008324583; 25.12.2008 JP 2008331372
(71) Applicant: Idemitsu Kosan Co., Ltd., Chiyoda-ku Tokyo 100-8321 (JP)
(72) Inventor: OBATA, Yutaka, Ichihara-shi Chiba 299-0193 (JP); IWASAKI, Takeshi, Ichihara-shi Chiba 299-0193 (JP); ONO, Hidetoshi, Ichihara-shi Chiba 299-0193 (JP); TAKEBE, Tomoaki, Ichihara-shi Chiba 299-0193 (JP)
(74) Representative: Vossius & Partner
(86) International application number: PCT/JP2009/070484
(87) International publication number: WO 2010/067779

(57) **Abstract**

Provided are a resin composition containing a (meth)acrylate compound (A) having a specific structure and a rigid moiety, and a (meth)acrylate compound (B) having a flexible moiety; a resin composition further containing a silane-based (meth)acrylate compound (C-1), an antioxidant (C-2) or an aliphatic compound (C-3) having a specific structure; and an optical component. A resin for an optical component can be produced from those resin compositions, the resin having excellent transparency, causing no cracks, being stable against heat without causing yellowing, and having a low coefficient of thermal expansion, a low water content, excellent shape stability, with excellent mold releasability, and excellent adhesiveness with a coating material that suppresses surface reflection and improves transmittance.

## Description

### Technical Field

The present invention relates to a raw material composition for producing a resin for an optical component that has excellent transparency, causes no cracks, is stable against heat without causing yellowing, and has a low coefficient of thermal expansion, a low water content, excellent shape stability, excellent mold releasability, and excellent adhesiveness with a coating material that suppresses surface reflection and improves a transmittance, a resin for an optical component, and an optical component.

### Background Art

Heretofore, there are known as transparent resins, a polymethylmethacrylate resin, a polycarbonate resin, a polystyrene resin, an alicyclic olefin polymer (for example, see Patent Document 1), and an epoxy resin. Such transparent resins have been industrially manufactured in a large scale, and used in great quantities in various fields, because of their good transparency.

Further, such transparent resins have been used as glass substitutes by taking advantages, in addition to their good transparency, of light weight properties, and moldability. Further, while reflecting recent trends of lightness, thinness, shortness, and smallness, and reduction in the number of parts, the transparent resins have been required to be materials capable of resisting a solder reflow step. This requires the transparent resins to have very high heat resistance in addition to optical properties such as light transmittance.

However, heat resistance of the above-mentioned transparent resins is not fully sufficient. For example, even the polycarbonate resin, which being said as having the highest heat resistance of the above-mentioned transparent resins, has a glass transition temperature, which is an index of its heat resistance, of about 150°C. For this reason, there has been a need for the development of a new transparent resin having higher heat resistance.

As the transparent resins, specifically, poly (meth)acrylate-based polymers such as polymethylmethacrylate, and polycarbonate-based polymers have already been used as a material of a resin for an optical component. However, polymethylacrylate, which is one of the above-mentioned poly(meth)acrylate-based polymers, is inferior in properties including heat resistance, thermal stability, and solvent resistance, and has a high water absorption property and low water resistance. Therefore, polymethylacrylate can not be used in the field where such properties were demanded. In addition, polymethylmethacrylate is used as a material of a resin for an optical component, but it is not applicable to the field where very high heat resistance and thermal stability enough to resist a solder reflow step are especially demanded.

As a method of improving the above-mentioned, heretofore known problem involved in the poly(meth)acrylate-based polymers in the field of the material of a resin for an optical component, a method that employs a homopolymer of polycyclic, alicyclic alkyl (meth)acrylate or a copolymer of the polycyclic, alicyclic alkyl (meth)acrylate and various (meth)acrylate-based monomers is proposed (for example, see Patent Documents 2 to 4).

Both of a homopolymer and a copolymer of the polycyclic, alicyclic alkyl (meth) acrylate described in Patent Documents 2 and 3 have been improved in their heat resistance and thermal stability as compared with the heretofore used polymethyl (meth)acrylate. However, the degree of improvement is small, and heat resistance enough to resist a solder reflow step has not yet achieved. Patent Document 4 discloses adamantyl (meth)acrylate, but its heat resistance is insufficient for use in an optical member application, and the deformation or rupture of adamantyl (meth) acrylate occurs at the time of a solder reflow step.
In view of the foregoing, the development of a material having high transparency, a low water content, and a low coefficient of linear expansion, and of a material excellent in heat resistance and thermal stability has been strongly demanded in the field of resin materials for optical components.
In addition, the development of a material that has excellent transparency, causes no cracks, is stable against heat without causing yellowing, and has excellent shape stability has been strongly demanded. Further, the following approach has been adopted to additionally improve the light transmittance of such transparent material. The surface of the material is coated with an inorganic substance such as silicon oxide or titanium oxide for suppressing the reflectance of the surface. As a result, the reflectance of the surface is suppressed, and hence the light transmittance of the material is improved. However, no adhesive force is established between the inorganic substance and the plastic, and hence the inorganic substance is apt to peel at an interface therebetween. As a result, a problem such as the occurrence of a crack in the coating layer at the time of a heat step such as a solder reflow arises. In view of the foregoing, improvements in the peeling resistance of the coating layer (tape adhesiveness) and heat-resistant adhesiveness with the inorganic material as well as the maintenance of a bending modulus have been requested of the above-mentioned resin material. In addition, the releasability of an optical component from a mold is of importance in the case of the production of the optical component.
[Patent Document 1] JP 2002-105131 A
[Patent Document 2] JP 07-17713 B
[Patent Document 3] JP 06-208001 A
[Patent Document 4] JP 2006-213851 A

### [Summary of the Invention]

### [Problems to be solved by the Invention]

The present invention has been made in view of the above-mentioned circumstances, and an object of the present invention is to provide a raw material composition for producing a resin for an optical component that has excellent transparency, causes no cracks, is stable against heat without causing yellowing, and has a low coefficient of thermal expansion, a low water content, excellent shape stability, excellent mold releasability, and excellent adhesiveness with a coating material that suppresses surface reflection and improves a transmittance, a resin for an optical component, and an optical component.

### [Means for solving the Problems]

The inventors of the present invention have made extensive studies to achieve the object. As a result, the inventors have found that the use of a resin composition containing a (meth) acrylate compound (A) having a specific structure and a rigid moiety, and a (meth) acrylate compound (B) having a flexible moiety provides a resin for an optical component having the above-mentioned characteristics. It should be noted that the present invention can be divided into the following four inventions.
(Invention 1) The use of a resin composition combining the (meth)acrylate compound having a specific structure and a rigid moiety and the (meth)acrylate compound having a flexible moiety, and containing a polyfunctional (meth) acrylate compound at a large content provides the raw material composition for producing a resin for an optical component having excellent transparency, a low coefficient of thermal expansion, and a low water content, the resin for an optical component, and the optical component described above.
(Invention 2) The use of a resin composition containing the (meth) acrylate compound (A) including an adamantyl group and having a rigid moiety, the (meth)acrylate compound (B) having a flexible moiety, and a silane-based (meth) acrylate compound (C-1) provides a raw material composition for producing a resin for an optical component that has excellent transparency, causes no cracks, has excellent shape stability, is stable against heat without causing yellowing, and has excellent adhesiveness with a coating material that suppresses surface reflection and improves a transmittance, a resin for an optical component, and an optical component.
(Invention 3) The use of a resin composition containing the (meth) acrylate compound (A) including an adamantyl group and having a rigid moiety, the (meth) acrylate compound (B) having a flexible moiety, and an antioxidant (C-2) having a specific structure provides a raw material composition for producing a resin for an optical component that has excellent transparency, is stable against heat without causing yellowing, causes no cracks, and has excellent shape stability, a resin for an optical component, and an optical component.
(Invention 4) The use of a resin composition containing the (meth) acrylate compound (A) including an adamantyl group and having a rigid moiety, the (meth)acrylate compound (B) having a flexible moiety, and a aliphatic compound (C-3) having a specific structure provides a raw material composition for producing a resin for an optical component that has excellent transparency, causes no cracks, has excellent shape stability, is stable against heat without causing yellowing, and is excellent in mold releasability at the time of its molding, a resin for an optical component, and an optical component.
That is, the present invention provides the following raw material composition used for a resin for an optical component, resin for an optical component, and optical component.

1. A raw material composition used for a resin for an optical component, including: a (meth)acrylate compound (A) represented by the following general formula (I); and a (meth)acrylate compound (B) represented by the following general formula (II): 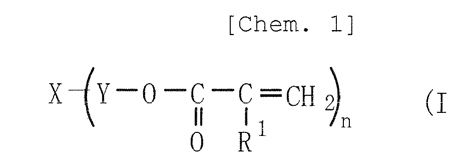 wherein X represents a polycyclic, aliphatic hydrocarbon group, an aromatic hydrocarbon group, or a monocyclic, aliphatic hydrocarbon group, Y's each independently represent a direct bond, an alkylene group having 1 to 4 carbon atoms, or an oxyalkylene group having 1 to 4 carbon atoms, R¹'s each independently represent a hydrogen atom or a methyl group, and n represents an integer of 1 to ⁴;

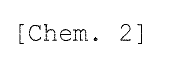

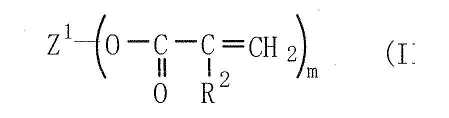

wherein Z¹ represents an acyclic hydrocarbon group which has 5 to 30 carbon atoms and which may include an ether bond, and/or an oxyalkylene group represented by -R³(OR³)k- wherein R³ represents an organic substituent including a linear alkylene group having 1 to 4 carbon atoms, and k represents an integer of 1 to 20, R²'s each independently represent a hydrogen atom or a methyl group, and m represents an integer of 1 to 8.

2. The raw material composition used for a resin for an optical component according to the above-mentioned item 1, in which the (meth)acrylate compound (B) includes a compound represented by the following general formula (III) or the following general formula (IV): 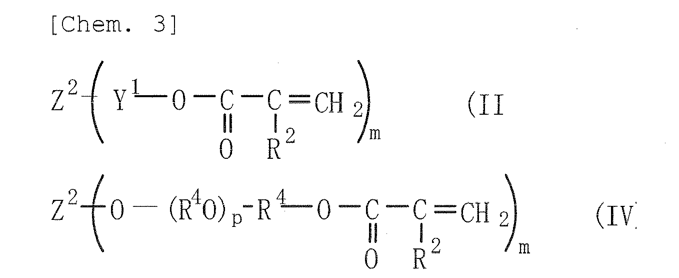 wherein Z^{2'} s represent one or more kinds of organic groups selected from a linear, aliphatic hydrocarbon group which has 1 to 30 carbon atoms and which may include ether, a branched, aliphatic hydrocarbon group which has 3 to 30 carbon atoms and which may include an ether bond, a monocyclic or polycyclic, aliphatic hydrocarbon group, and an aromatic hydrocarbon group, Y¹ represents an acyclic hydrocarbon group which has 5 to 30 carbon atoms and which may include an ether bond, R⁴'s each independently represent an alkylene group having 1 to 4 carbon atoms, p represents an integer of 2 to 20, and R² and m each have the same meaning as meaning in the foregoing formula.

3. The raw material composition used for a resin for an optical component according to the above-mentioned item 2, in which Y¹ of the (meth) acrylate compound (B) represented by the general formula (III) represents an alkylene group represented by -(CH₂)r-or - (CH₃CH) r- wherein r represents an integer of 5 to 30), or a propylene group represented by - (CR⁶-CR⁷) q- wherein one of R⁶ and R⁷ represents a hydrogen atom and the other represents a methyl group, and q represents an integer of 2 to 15.

4. The raw material composition used for a resin for an optical component according to the above-mentioned item 1, in which:
(1) the composition contains the (meth) acrylate compounds (A) represented by the general formula (I) and the (meth)acrylate compound (B) represented by the general formula (II);
(2) a ratio of a total amount of a compound wherein n represents 2 to 4 in the (meth) acrylate compounds (A) represented by the general formula (I) and the (meth)acrylate compound (B) to a compound wherein n represents 1 in the (meth)acrylate compounds (A) represented by the general formula (I) is 55 to 0 mass%:45 to 100 mass%; and
(3) the (meth) acrylate compound (B) has a mass average molecular weight of 140 to 2,500.
5. The raw material composition used for a resin for an optical component according to the above-mentioned item 1, in which:
(1) the composition contains the (meth) acrylate compounds (A) represented by the general formula (I) and the (meth)acrylate compound (B) represented by the general formula (II);
(2) the (meth)acrylate compounds (A) contain at least one (meth)acrylate compound wherein X represents an adamantyl group;
(3) a ratio between a compound wherein n represents 1 and a compound wherein n represents 2 to 4 in the (meth) acrylate compounds (A) represented by the general formula (I) is 50 to 0 mass%:50 to 100 mass%; and
(4) a ratio between the (meth) acrylate compounds (A) and the (meth)acrylate compound (B) is 60 to 100 mass%:40 to 0 mass%.
6. The raw material composition used for a resin for an optical component according to the above-mentioned item 5, in which 20 to 100 mass% of the (meth)acrylate compounds (A) include the (meth)acrylate compound having an adamantyl group.
7. The raw material composition used for a resin for an optical component according to the above-mentioned item 5, further including 0. 01 to 10 parts by mass of an antioxidant with respect to 100 parts by mass of a total amount of the (meth) acrylate compounds (A) and the (meth)acrylate compound (B).

8. The raw material composition used for a resin for an optical component according to the above-mentioned item 1, in which:
the composition contains the (meth)acrylate compounds (A) represented by the general formula (I), the (meth) acrylate compound (B) represented by the general formula (II), and a silane-based (meth) acrylate compound (C-1) represented by the following general formula (V);
   (1) the (meth)acrylate compounds (A) contain at least one (meth)acrylate compound wherein X represents an adamantyl group;
   (2) the (meth)acrylate compound (B) has a mass average molecular weight of 140 to 2,500; and
   (3) a ratio "(meth)acrylate compounds (A):(meth)acrylate compound (B): silane-based (meth) acrylate compound (C-1)" is 40 to 99 mass%:60 to 0 mass%: 1 to 40 mass%: 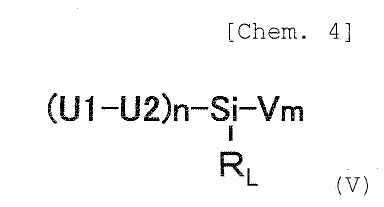
   wherein U1 represents an acryloxy group CH₂=CH-CO-O- or amethacryloxy group CH₂=C(CH₃)-CO-O-, U2 represents a single bond, a hydrocarbon group having 1 to 10 carbon atoms, or an oxyalkylene group represented by -(-O-R°-)ₚ- wherein R⁰ represents a hydrocarbon group having 1 to 4 carbon atoms, and p represents an integer of 2 to 10, R represents a methyl group or an ethyl group, V represents an alkoxy group having 1 to 5 carbon atoms or a hydroxy group, L represents 0 or 1, m and n each represent an integer of 1 to 4, and L+n+m=4.

9. The raw material composition used for a resin for an optical component according to the above-mentioned item 8, in which 20 to 100 mass% of the (meth)acrylate compounds (A) include the (meth)acrylate compound having an adamantyl group.
10. The raw material composition used for a resin for an optical component according to the above-mentioned item 8, in which a ratio between a compound wherein n represents 1 and a compound wherein n represents 2 to 4 in the (meth) acrylate compounds (A) represented by the general formula (I) is 50 to 0 mass%:50 to 100 mass%.
11. The raw material composition used for a resin for an optical component according to the above-mentioned item 8, in which m in the (meth)acrylate compound (B) represented by the general formula (II) represents an integer of 4 to 8, Z¹ has a molecular weight of 400 or less, and Z¹ contains an organic group except the acyclic hydrocarbon group which has 5 to 30 carbon atoms and which may include an ether bond, and the oxyalkylene group represented by -R³(OR³) k-wherein R³ represents an organic substituent including a linear alkylene group having 1 to 4 carbon atoms, and k represents an integer of 1 to 20 at 15 to 50 mass%.
12. The raw material composition used for a resin for an optical component according to the above-mentioned item 8, further including 0.01 to 10 parts by mass of an antioxidant with respect to 100 parts by mass of a total amount of the (meth) acrylate compounds (A), the (meth)acrylate compound (B), and the silane-based (meth)acrylate compound (C-1).

13. The raw material composition used for a resin for an optical component according to the above-mentioned item 1, in which:
the composition contains the (meth)acrylate compounds (A) represented by the general formula (I), the (meth)acrylate compound (B) represented by the general formula (II), and at least one kind of an antioxidant (C-2) selected from a lactone-based antioxidant and a hindered phenol-based antioxidant;
   (1) the (meth)acrylate compounds (A) contain at least one (meth)acrylate compound wherein X represents an adamantyl group;
   (2) the (meth)acrylate compound (B) has a mass average molecular weight of 140 to 2,500;
   (3) a ratio between the (meth) acrylate compounds (A) and the (meth)acrylate compound (B) is 40 to 100 mass%:60 to 0 mass%; and
   (4) a content of the antioxidant (C-2) is 0.01 to 5 parts by mass with respect to 100 parts by mass of a total amount of the (meth)acrylate compounds (A) and the (meth)acrylate compound (B).

14. The raw material composition used for a resin for an optical component according to the above-mentioned item 13, in which 20 to 100 mass% of the (meth) acrylate compounds (A) include the (meth)acrylate compound having an adamantyl group.
15. The raw material composition used for a resin for an optical component according to the above-mentioned item 13, in which a ratio between a compound wherein n represents 1 and a compound wherein n represents 2 to 4 in the (meth) acrylate compounds (A) represented by the general formula (I) is 50 to 0 mass%: 50 to 100 mass%.
16. The raw material composition used for a resin for an optical component according to the above-mentioned item 13, in which m in the (meth)acrylate compound (B) represented by the general formula (II) represents an integer of 4 to 8, Z¹ has a molecular weight of 400 or less, and Z¹ contains an organic group except the acyclic hydrocarbon group which has 5 to 30 carbon atoms and which may include an ether bond, and the oxyalkylene group represented by -R³(OR³) k-wherein R³ represents an organic substituent including a linear alkylene group having 1 to 4 carbon atoms, and k represents an integer of 1 to 20 at 15 to 50 mass%.

17. The raw material composition used for a resin for an optical component according to the above-mentioned item 13, in which the antioxidant (C-2) further contains a phosphorus-based antioxidant.
18. The raw material composition used for a resin for an optical component according to the above-mentioned item 13, in which the lactone-based antioxidant as the antioxidant (C-2) has a molecular weight in a range of 300 to 1,500.
19. The raw material composition used for a resin for an optical component according to the above-mentioned item 13, in which the hindered phenol-based antioxidant as the antioxidant (C-2) has a molecular weight in a range of 300 to 1,500.

20. The raw material composition used for a resin for an optical component according to the above-mentioned item 4, in which:
the composition contains the (meth)acrylate compounds (A) represented by the general formula (I), the (meth) acrylate compound (B) represented by the general formula (II), and an aliphatic compound (C-3) represented by the following general formula (VI);
   (1) the (meth)acrylate compounds (A) contain at least one (meth)acrylate compound wherein X represents an adamantyl group;
   (2) the (meth)acrylate compound (B) has a mass average molecular weight of 140 to 2, 500;
   (3) a ratio between the (meth) acrylate compounds (A) and the (meth)acrylate compound (B) is 40 to 100 mass%: 60 to 0 mass%; and
   (4) a content of the aliphatic compound (C-3) is 0.01 to 10 parts by mass with respect to 100 parts by mass of a total amount of the (meth) acrylate compounds (A) and the (meth) acrylate compound (B) : 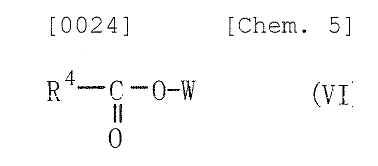 wherein R⁴ represents an aliphatic hydrocarbon group having 6 to 30 carbon atoms, and W represents a hydrogen atom, a metal atom, or a hydrocarbon group having 1 to 8 carbon atoms.

21. The raw material composition used for a resin for an optical component according to the above-mentioned item 20, in which 20 to 100 mass% of the (meth)acrylate compounds (A) include the (meth)acrylate compound having an adamantyl group.
22. The raw material composition used for a resin for an optical component according to the above-mentioned item 20, in which a ratio between a compound wherein n represents 1 and a compound wherein n represents 2 to 4 in the (meth) acrylate compounds (A) represented by the general formula (I) is 50 to 0 mass%: 50 to 100 mass%.
23. The raw material composition used for a resin for an optical component according to the above-mentioned item 20, in which m in the (meth) acrylate compound (B) represented by the general formula (II) represents an integer of 4 to 8, Z¹ has a molecular weight of 400 or less, and Z¹ contains an organic group except the acyclic hydrocarbon group which has 5 to 30 carbon atoms and which may include an ether bond, and the oxyalkylene group represented by -R³(OR³) k-wherein R³ represents an organic substituent including a linear alkylene group having 1 to 4 carbon atoms, and k represents an integer of 1 to 20 at 15 to 50 mass%.

24. The raw material composition used for a resin for an optical component according to the above-mentioned item 20, in which the aliphatic compound (C-3) has a melting point in a range of -40 to 140°C.
25. The raw material composition used for a resin for an optical component according to the above-mentioned item 20, in which W of the aliphatic compound (C-3) represents a hydrogen atom, and R⁴ thereof represents an aliphatic hydrocarbon group having 6 to 20 carbon atoms.
26. The raw material composition used for a resin for an optical component according to the above-mentioned item 20, in which W of the aliphatic compound (C-3) represents a metal atom, and R⁴ thereof represents an aliphatic hydrocarbon group having 6 to 18 carbon atoms.
27. The rawmaterial composition used for a resin for an optical component according to the above-mentioned item 20, in which W of the aliphatic compound (C-3) represents a hydrocarbon group, and a total number of carbon atoms of the hydrocarbon groups represented by R⁴ and W thereof is 7 to 30.
28. The raw material composition used for a resin for an optical component according to the above-mentioned item 20, further including 0.01 to 10 parts by mass of an antioxidant with respect to 100 parts by mass of the total amount of the (meth)acrylate compounds (A) and the (meth)acrylate compound (B).

29. A resin for an optical component, which is obtained by polymerizing the raw material composition used for a resin for an optical component according to any one of the above-mentioned items 1, 4, 8, 13, and 20.
30. An optical component, which is obtained by molding the resin for an optical component according to the above-mentioned item 29.

### [Advantageous Effects of Invention]

According to the present invention, there can be provided a raw material composition that provides an excellent resin for an optical component that has excellent transparency, causes no cracks, and is stable against heat without causing yellowing, a resin for an optical component, and an optical component.
According to the invention 1 (the above-mentioned items 4 to 7), a resin for an optical component having an additionally low coefficient of expansion and an additionally low water content, and excellent in workability is obtained.
According to the invention 2 (the above-mentioned items 8 to 12), a resin for an optical component having additionally excellent shape stability, and excellent in peeling resistance (tape adhesiveness) and heat-resistant adhesiveness with a coating layer formed of an inorganic material while maintaining a bending modulus is obtained.
According to the invention 3 (the above-mentioned items 13 to 19), a resin for an optical component particularly stable against heat without causing yellowing, i.e., having excellent thermal stability, and having additionally excellent shape stability is obtained.
According to the invention 4 (the above-mentioned items 20 to 28), a resin for an optical component having additionally excellent shape stability and excellent in mold releasability at the time of its molding is obtained.

### [Mode for Carrying Out the Invention]

A rawmaterial composition used for a resin for an optical component of the present invention contains a (meth)acrylate compound (A) represented by the following general formula (I) and a (meth)acrylate compound (B) represented by the following general formula (II). It should be noted that the term "(meth)acrylate compound" comprehends both of an acrylate compound and a methacrylate compound.
Next, each component of the raw material composition used for a resin for an optical component of the present invention is described. 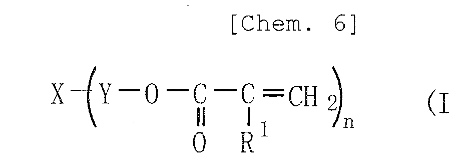 (X represents a polycyclic, aliphatic hydrocarbon group, an aromatic hydrocarbon group, or a monocyclic, aliphatic hydrocarbon group, Y's each independently represent a direct bond, an alkylene group having 1 to 4 carbon atoms, or an oxyalkylene group having 1 to 4 carbon atoms, R¹'s each independently represent a hydrogen atom or a methyl group, and n represents an integer of 1 to 4.) 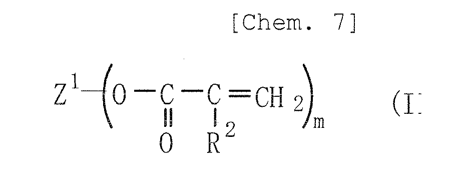 (Z¹ represents an acyclic hydrocarbon group which has 5 to 30 carbon atoms and which may include an ether bond, and/or an oxyalkylene group represented by -R³(OR³)k- (wherein R³ represents an organic substituent including a linear alkylene group having 1 to 4 carbon atoms, and k represents an integer of 1 to 20), R²'s each independently represent a hydrogen atom or a methyl group, and m represents an integer of 1 to 8.)

The (meth)acrylate compound (A) in the raw material composition used for a resin for an optical component of the present invention serves mainly as a hard segment in a resin for an optical component, and turns into a moiety having low intermolecular mobility upon polymerization.
First, examples of the polycyclic, aliphatic hydrocarbon group represented by X in the (meth)acrylate compound (A) represented by the general formula (I) include a decahydronaphthyl group, a norbornyl group, a 1-methyl-norbornyl group, a 5,6-dimethyl-norbornyl group, an isobornyl group, a tetracyclo[4.4.0.1^{2.5}.1^{7.10}]dodecyl group, a 9-methyl-tetracyclo[4.4.0.1^{2.5}.1^{7.10}] dodecyl group, a dicyclopentanyl group, a tricyclopentanyl group, and an adamantyl group represented by the following general formula. 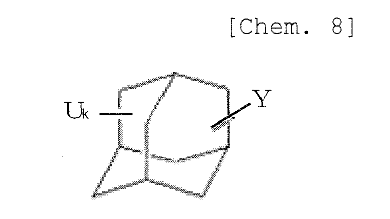 In the above-mentioned formula, U represents an alkyl group having 1 to 4 carbon atoms, a halogen atom, a hydroxyl group, or =O formed by the gathering of two U's, k represents an integer of 0 to 15, and a plurality of U's may be identical to or different from each other.
Of those, a dicyclopentanyl group and a 1-adamantyl group are preferred, and a 1-adamantyl group is particularly suitable. It should be noted that the groups listed above comprehend not only a monoyl group but also a diyl group, a tolyl group, and a tetrayl group.

One kind of the (meth)acrylate compounds represented by the general formula (I) may be used, or two or more kinds thereof may be used in combination.
From the viewpoint of heat resistance, the (meth)acrylate compounds (A) represented by the general formula (I) are such that 20 to 100 mass% of the (meth)acrylate compounds (A) are a (meth)acrylate compound having an adamantyl group.
A compound represented by the general formula (I) wherein n represents 1 and including an adamantyl group is, for example, adamantyl methanol (meth)acrylate or adamantyl ethanol (meth)acrylate.

Examples of the compound wherein n represents 2 include adamantyl dimethanol di(meth)acrylate and adamantyl diethanol di(meth)acrylate.
Examples of the compound wherein n represents 3 include adamantyl trimethanol tri(meth)acrylate and adamantyl triethanol tri(meth)acrylate.

Y's each independently represent a direct bond, an alkylene group having 1 to 4 carbon atoms, an oxyalkylene group having 1 to 4 carbon atoms. Specifically, Y's each independently represent -C-, -C-C-, -C-C-C-, -C-C-C-C-, -C(C)-C-, -C(C₂)-C-, ,and the like. Specific examples of the oxyalkylene group include -C-O-, -C-C-O-, -C-C(C)-O-, -C-C-C-O-, -C-C-C-C-O-, -C-C-O-C-, -C-O-C- ,and the like.
It is essential that X should represent a polycyclic, aliphatic hydrocarbon group, an aromatic hydrocarbon group, or a monocyclic, aliphatic hydrocarbon group, and Y should represent a direct bond, an alkylene group having 4 or less carbon atoms, or an oxyalkylene group having 4 or less carbon atoms because the X and Y portions each serve as a hard segment moiety upon polymerization.

A ratio of molecules each containing a (meth)acrylate compound including an adamantyl group in the (meth)acrylate compounds (A) is preferably 20 to 100 mass%, more preferably 30 to 100 mass%. Setting the ratio to 20 mass% or more can suppress susceptibility to discoloration against heat.

Examples of the aromatic hydrocarbon group include a biphenyl group, a phenyl group, a naphthyl group, an anthracene group, a bisphenol group, and the residues of the following aromatic hydrocarbon compounds.

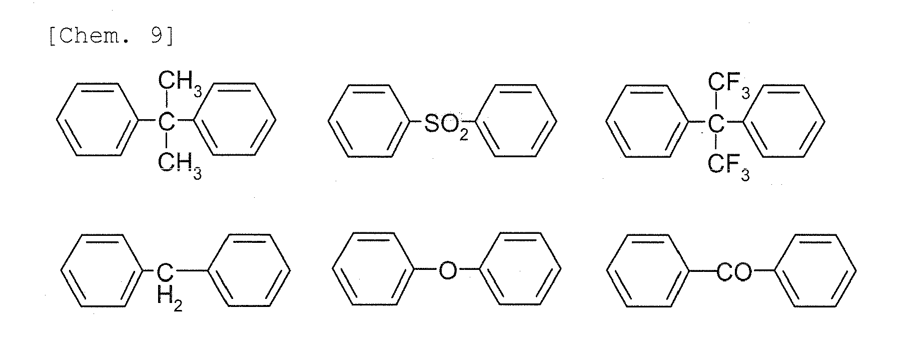

Examples of the monocyclic, aliphatic hydrocarbon group include a cyclohexyl group, a cyclobutyl group, a cyclopentyl group, a cycloheptyl group, and a cyclooctyl group.
It should be noted that the groups listed above comprehend not only a monoyl group but also a diyl group, a tolyl group, and a tetrayl group.
Examples of the (meth)acrylate compound wherein X represents an aromatic hydrocarbon group or a monocyclic, aliphatic hydrocarbon group as described above include bisphenol-A di(meth)acrylate, cyclohexane dimethanol di(meth)acrylate, tricyclodecane dimethanol di(meth)acrylate, alkoxylated cyclohexane dimethanol di(meth)acrylate, and alkoxylated bisphenol-A di(meth)acrylate.

The (meth) acrylate compounds (A) preferably have a ratio between a compound wherein n represents 1 in the general formula (I) and a compound wherein n represents 2 to 4 in the formula (I) of 50 to 0 mass%: 50 to 100 mass%. The ratio is more preferably 40 to 0 mass%: 60 to 100 mass%.
Setting the ratio of the compound wherein n represents 1 in the general formula (I) to 50 mass% or less provides an optical resin causing no cracks after a heat history and excellent in shape stability. When X's represent only an adamantyl group or n's represent only 1, heat resistance or stability is affected.

The (meth)acrylate compound (B) is a (meth)acrylate compound represented by the following general formula (II). One kind of such compounds may be used, or two or more kinds thereof may be used in combination, and a compound wherein m represents 2 or more is preferred from the viewpoint of a crosslink density.
The (meth) acrylate compound (B) has a mass average molecular weight of 140 to 2,500, preferably 190 to 2,000. A mass average molecular weight of the (meth)acrylate compound (B) in excess of 2,500 may cause a shape change after a heat history. 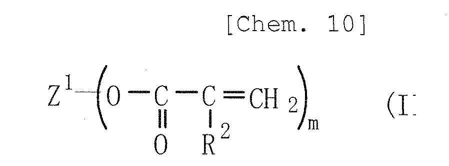 (Z¹ represents an acyclic hydrocarbon group which has 5 to 30 carbon atoms and which may include an ether bond, and/or an oxyalkylene group represented by -R³ (OR³) k- (R³ represents an organic substituent including a linear alkylene group having 1 to 4 carbon atoms, and k represents an integer of 1 to 20), R²'s each independently represent a hydrogen atom or a methyl group, and m represents an integer of 1 to 8.)

Z¹ of the (meth) acrylate compound (B) may further include, for example, the linear hydrocarbon group having less than 5 carbon atoms, a branched hydrocarbon group, a monocyclic or polycyclic, aliphatic hydrocarbon group, or an aromatic hydrocarbon group as long as the acyclic hydrocarbon group which has 5 to 30 carbon atoms and which may include an ether bond, or the oxyalkylene group represented by -(OR³)k- described above is included.
Such acyclic hydrocarbon group which has 5 to 30 carbon atoms and which may include an ether bond, and such oxyalkylene group represented by -R³(OR³)k- each serve as a soft segment in a resin for an optical component. The soft segment (moiety having a large number of so-called flexible moieties) turns into a pliable moiety as a result of an improvement in the mobility of a polymer chain in a molecule of the resin.

In addition, when Z¹ of the (meth) acrylate compound (B) represents the above-mentioned acyclic hydrocarbon group which has 5 to 30 carbon atoms and which may include an ether bond, the compound is preferably represented by the following general formula (III). Alternatively, when Z¹ of the (meth) acrylate compound (B) represents the oxyalkylene group represented by -R³(OR³)k-, the compound is preferably represented by the following general formula (IV).

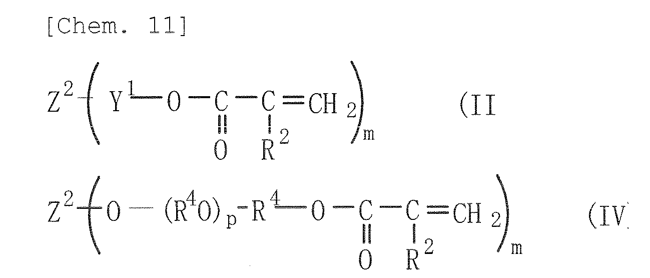

(Z^{2'}s represent one or more kinds of organic groups selected from a linear hydrocarbon group which has 1 to 30 carbon atoms and which may include an ether bond, a branched hydrocarbon group which has 3 to 30 carbon atoms and which may include an ether bond, a monocyclic or polycyclic, aliphatic hydrocarbon group, and an aromatic hydrocarbon group, Y¹ represents an acyclic hydrocarbon group which has 5 to 30 carbon atoms and which may include an ether bond, R4's each independently represent an alkylene group having 1 to 4 carbon atoms, p represents an integer of 2 to 20, and R² and m each have the same meaning as that in the foregoing formula.)

The monocyclic or polycyclic, aliphatic hydrocarbon group, and the aromatic hydrocarbon group each represented by Z² are the same as those described for the general formula (I). The alkylene group having 1 to 4 carbon atoms represented by R⁴ is also the same as that described for the general formula (I).
The linear, aliphatic hydrocarbon group which has 1 to 30 carbon atoms and which may include an ether bond represented by Z² refers to an alkylene group or an oxyalkylene group. The alkylene group and the oxyalkylene group are the same as those described for Y of the general formula (I).
Examples of the branched, aliphatic hydrocarbon group which has 3 to 30 carbon atoms and which may include an ether bond represented by Z² include an isopropyl group, an isobutyl group, an s-butyl group, a t-butyl group, an isopentyl group, a neopentyl group, a t-pentyl group, and an isohexyl group. An ether bond may be included between carbon and another carbon of any such group.

Specific examples of the acyclic hydrocarbon group represented by Y¹ include an alkylene group represented by - (CH₂) r-or - (CH₃CH) r- (r represents an integer of 5 to 30) , a propylene group represented by -(CR⁵-CR⁶)_{q}- (one of R⁵ and R⁶ represents a hydrogen atom and the other represents a methyl group, and q represents an integer of 2 to 15), and an alkoxy group represented by - (CH₂O)r-, -(CH₃CHO)r- (r represents an integer of 5 to 30), or the like.
Further, such a compound that Y of the (meth) acrylate compound (B) represented by the above-mentioned general formula (IV) represents a linear alkylene group represented by -(CH)r- (r represents an integer of 5 to 30) or a propylene group represented by -(CR⁵-CR⁶)_{q}- (one of R⁵ and R⁶ represents a hydrogen atom and the other represents a methyl group, and q represents an integer of 2 to 15) is preferred.

Examples of the (meth)acrylate compound which is represented by the general formula (III) and in which m represents 2 include 1,5-pentanediol di(meth)acrylate, 1,6-hexanediol di(meth)acrylate, 1,9-nonanediol di(meth)acrylate, 1,12-dodecanediol dimethacrylate (manufactured by Sartomer Japan Inc.), polybutadiene di(meth)acrylate, hydrogenated polybutadiene di(meth)acrylate.
Examples of the (meth) acrylate compound which is represented by the general formula (III) and in which m represents 3 or more include pentaerythritol tetraacrylate, dipentaerythritol hexaacrylate, and polyfunctional polyester (meth)acrylate.

Examples of the (meth)acrylate compound which is represented by the general formula (IV) and in which m represents 2 include diethylene glycol di(meth)acrylate, triethylene glycol di(meth)acrylate, polyethylene glycol di(meth)acrylate having p of 2 to 20, polypropylene glycol di(meth)acrylate, polybutylene glycol di (meth) acrylate, ethoxylated bisphenol-A di (meth) acrylate, alkoxylated neopentyl glycol diacrylate, tetraethylene glycol di(meth)acrylate, and alkoxylated cyclohexanediol diacrylate (manufactured by Sartomer Japan Inc.). Preferred are polyethylene glycol di (meth) acrylate having p of 2 to 20, polypropylene glycol di(meth)acrylate, polybutylene glycol di(meth)acrylate, and tetraethylene glycol di(meth)acrylate.

Examples of the (meth)acrylate compound which is represented by the general formula (IV) and in which m represents 3 or more include ethoxylated trimethylolpropane tri (meth) acrylate, propoxylated trimethylolpropane tri (meth) acrylate, alkoxylated trimethylolpropane tri(meth)acrylate having p of 2 to 20, ethoxylated glyceryl tri(meth)acrylate, propoxylated glyceryl tri(meth)acrylate, alkoxylated glyceryl tri(meth)acrylate, ethoxylated pentaerythritol tetra(meth)acrylate, propoxylated pentaerythritoltetra(meth)acrylate, alkylatedtrimethylolpropane tri(meth)acrylate, alkoxylated pentaerythritol tetra(meth)acrylate having p of 2 to 20, ethoxylated dipentaerythritol hexa(meth)acrylate, propoxylated dipentaerythritol hexa (meth) acrylate, alkylated dipentaerythritol hexa(meth)acrylate, alkoxylated dipentaerythritol hexa(meth)acrylate having p of 2 to 20, ethoxylated dipentaerythritol penta(meth)acrylate, propoxylated dipentaerythritol penta(meth)acrylate, alkylated dipentaerythritol hexa(meth)acrylate, alkoxylated dipentaerythritol penta(meth)acrylate having p of 2 or more, and alkylated dipentaerythritol penta(meth)acrylate.

Such a compound that m in the (meth) acrylate compound (B) represented by the general formula (II) represents an integer of 4 to 8 is preferably the following (meth) acrylate compound. Z¹ has a molecular weight of 400 or less, and an organic group except the acyclic hydrocarbon group which has 5 to 30 carbon atoms and which may include an ether bond, and the oxyalkylene group represented by -(OR³)k- is incorporated in Z¹.

The raw material composition used for a resin for an optical component in the invention 1 is such that a ratio (A1: (A2+B)) of the total amount of a compound (A2) wherein n represents 2 to 4 in the (meth)acrylate compounds (A) represented by the general formula (I) and the (meth)acrylate compound (B) to a compound (A1) wherein n represents 1 in the (meth)acrylate compounds (A) represented by the general formula (I) is 55 to 0 mass%: 45 to 100 mass%.
It should be noted that the invention 1 comprehends the following product. A ratio between the compound wherein n represents 1 and the compound wherein n represents 2 to 4 in the (meth)acrylate compounds (A) represented by the general formula (I) is 50 to 0 mass%:50 to 100 mass%, and a ratio between the (meth)acrylate compounds (A) and the (meth) acrylate compound (B) is 60 to 100 mass%: 40 to 0 mass%.
In addition, the raw material composition used for a resin for an optical component in the invention 1 must be such that the compound (A) accounts for 45 to 100 mass% of the total amount of the compound (A) and the compound (B), and the compound (B) accounts for 55 to 0 mass% thereof. It is preferred that the compound (A) account for 48 to 100 mass% thereof, and the compound (B) account for 52 to 0 mass% thereof, and it is more preferred that the compound (A) account for 75 to 100 mass% thereof, and the compound (B) account for 25 to 0 mass% thereof. When the compound (A) accounts for 60 mass% or more thereof, an effect of the addition of the compound is obtained. As a result, the deformation and discoloration of the resultant resin due to heat are suppressed, and the resin has a low coefficient of linear expansion and a low water content.

The silane-based (meth)acrylate compound (C-1) in the invention 2 imparts adhesiveness to each of the compound (A) and the compound (B), and is represented by the following general formula (V). One kind of the compounds (C-1) may be used, or two or more kinds thereof may be used in combination.

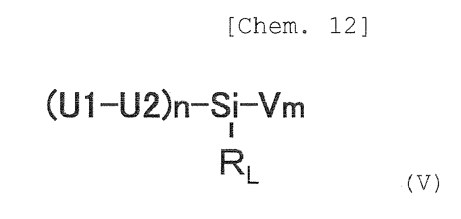

In the general formula (V), U1 represents an acryloxy group represented by CH₂=CH-CO-O- or a methacryloxy group represented by CH₂=C(CH₃)-CO-O-.
U2 represents a single bond, a hydrocarbon group, or an oxyalkylene group. The hydrocarbon group represented by U2 has 1 to 10, more preferably 2 to 5, more preferably 3 carbon atoms. When the number of carbon atoms is larger than the foregoing, the amount of SiO groups contacting an inorganic material reduces, and hence adhesiveness with the inorganic material may reduce. The oxyalkylene group is represented by - (-O-R⁰-)ₚ- wherein R⁰ represents a hydrocarbon group having 1 to 4 carbon atoms, and p represents an integer of 1 to 10.
R represents a methyl group or an ethyl group, and L represents 0 or 1. V represents an alkoxy group having 1 to 5 carbon atoms or a hydroxy group, preferably the alkoxy group. The alkoxy group is known to hydrolyze in the presence of moisture with ease to produce a silanol group (SiOH). m represents an integer of 0 to 3, n represents an integer of 1 to 4, and L+n+m=4.

Specific examples of the silane-based (meth)acrylate compound (C-1) include 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane.

With regard to the raw material composition used for a resin for an optical component in the invention 2, the compound (A) accounts for 40 to 99 mass% of the total amount of the compound (A), the compound (B), and the compound (C-1), the compound (B) accounts for 60 to 0 mass% thereof, and the compound (C-1) accounts for 40 to 1 mass% thereof. It is preferred that the compound (A) account for 40 to 95 mass% thereof, the compound (B) account for 50 to 0 mass% thereof, and the compound (C-1) account for 30 to 5 mass% thereof, and it is more preferred that the compound (A) account for 40 to 95 mass% thereof, the compound (B) account for 45 to 0 mass% thereof, and the compound (C-1) account for 25 to 5 mass% thereof. When the compound (A) accounts for 40 mass% or more thereof, an effect of the addition of the compound is obtained. As a result, the deformation and discoloration of the resultant resin due to heat are suppressed, and the resin has a low coefficient of linear expansion and a low water content. In addition, a content of the compound (C-1) of more than 40 mass% is not proper as a lens characteristic because the heating of a sample may involve the occurrence of a crack or a reduction in the elastic modulus of the material.

With regard to the raw material composition used for a resin for an optical component in each of the inventions 3 and 4, it is required that the compound (A) accounts for 40 to 100 mass% of the total amount of the compound (A) and the compound (B), and the compound (B) accounts for 60 to 0 mass% thereof. It is preferred that the compound (A) account for 45 to 99 mass% thereof and the compound (B) account for 55 to 1 mass% thereof, and it is more preferred that the compound (A) account for 50 to 95 mass% thereof and the compound (B) account for 50 to 5 mass% thereof. When the compound (A) accounts for 40 mass% or more thereof, an effect of the addition of the compound is obtained. As a result, the deformation and discoloration of the resultant resin due to heat are suppressed, and the resin has a low coefficient of linear expansion and a low water content. It should be noted that the content of the compound (B) in the raw material composition used for a resin for an optical component may be 0 mass%. In this case, a crack is apt to occur in a heat history 2 as described later in Examples, but no crack occurs in a heat history 1, no reduction in total light transmittance is observed, and an increase in YI value is small. Accordingly, the composition can be used as a raw material for a resin for an optical component.

Those described in JP 07-233160 A and JP 07-247278 A can each used as a lactone-based antioxidant to be used as the antioxidant (C-2) in the raw material composition used for a resin for an optical component of the invention 3. In addition, examples of the lactone-based antioxidant include commercially available products such as an HP-136 (manufactured by Ciba Specialty Chemicals Inc., trademark, compound name; 5,7-di-t-butyl-3-(3,4-dimethylphenyl)-3H-benzofuran-2-one).
The lactone-based antioxidant has a mass average molecular weight in the range of preferably 300 to 1,500, more preferably 330 to 1,300. When the mass average molecular weight falls within the range, sufficient solubility in the composition or a blend is obtained, and hence thermal yellowing resistance is expressed.

Examples of the hindered phenol-based antioxidants include commercially available products such as an Irganox 1010 (manufactured by Ciba Specialty Chemicals Inc., trademark), an Irganox 1076 (manufactured by Ciba Specialty Chemicals Inc., trademark), an Irganox 1330 (manufactured by Ciba Specialty Chemicals Inc., trademark), an Irganox 3114 (manufactured by Ciba Specialty Chemicals Inc., trademark), an Irganox 3125 (manufactured by Ciba Specialty Chemicals Inc., trademark), an Adekastab AO-20 (manufactured by ADEKA CORPORATION, trademark), an Adekastab AO-50 (manufactured by ADEKA CORPORATION, trademark), an Adekastab AO-60 (manufactured by ADEKA CORPORATION, trademark), an Adekastab AO-80 (manufactured by ADEKA CORPORATION, trademark), an Adekastab AO-30 (manufactured by ADEKA CORPORATION, trademark), an Adekastab AO-40 (manufactured by ADEKA CORPORATION, trademark), BHT (manufactured by Takeda Pharmaceutical Co., Ltd., trademark), a Cyanox 1790 (manufactured by American Cyanamid Company, trademark) , a Sumilizer GP (manufactured by Sumitomo Chemical Co. Ltd., trademark), a Sumilizer GM (manufactured by Sumitomo Chemical Co. Ltd. , trademark) , a Sumilizer GS (manufactured by Sumitomo Chemical Co. Ltd., trademark), and a Sumilizer GA-80 (manufactured by Sumitomo Chemical Co. Ltd., trademark).
The hindered phenol-based antioxidant has a mass average molecular weight in the range of preferably 300 to 1,500, more preferably 330 to 1,300. When the mass average molecular weight falls within the range, sufficient solubility in the composition or the blend is obtained, and hence the thermal yellowing resistance is expressed.

Examples of the phosphorus-based antioxidants include commercially available products such as an IRGAFOS 168 (manufactured by Ciba Specialty Chemicals Inc., trademark), an IRGAFOS 12 (manufactured by Ciba Specialty Chemicals Inc., trademark), an IRGAFOS 38 (manufactured by Ciba Specialty Chemicals Inc., trademark), an IRGAFOS P-EPQ (manufactured by manufactured by Ciba Specialty Chemicals Inc., trademark), an IRGAFOS 126 (manufactured by Ciba Specialty Chemicals Inc., trademark), an ADKSTAB 329K (manufactured by ADEKA CORPORATION, trademark), an ADKSTAB PEP-36 (manufactured by ADEKA CORPORATION, trademark), an ADKSTAB PEP-8 (manufactured by ADEKA CORPORATION, trademark), an ADKSTAB HP-10 (manufactured by ADEKA CORPORATION, trademark), an ADKSTAB 2112 (manufactured by ADEKA CORPORATION, trademark), an ADKSTAB 260 (manufactured by ADEKA CORPORATION, trademark), an ADKSTAB 522A (manufactured by ADEKA CORPORATION, trademark), a Weston 618 (manufactured by GE Specialty Chemicals, Inc., trademarark), a Weston 619G (manufactured by GE Specialty Chemicals, Inc., trademark), and a Weston 624 (manufactured by GE Specialty Chemicals, Inc., trademark).
The phosphorus-based antioxidant has a mass average molecular weight in the range of preferably 300 to 1,500, more preferably 330 to 1, 300. When the mass average molecular weight falls within the range, sufficient solubility in the composition or the blend is obtained, and hence the thermal yellowing resistance is expressed.

The raw material composition used for a resin for an optical component (which may be simply referred to as "raw material composition") of the invention 3 contains at least one kind selected from the above-mentioned lactone-based antioxidants and hindered phenol-based antioxidants as the antioxidant (C-2), and a phosphorus-based antioxidant and a hindered phenol-based antioxidant are preferably combined.
A (meth)acrylate antioxidant to which a hydrocarbon group including an adamantane structure is ester-bonded corresponding to the component (A), or a (meth)acrylate antioxidant having any other functional groups corresponding to the component (B) can be incorporated into the raw material composition.
The content of the antioxidant (C-2) in the raw material composition is 0.01 to 5 parts by mass, preferably 0.02 to 3 parts by mass with respect to 100 parts by mass of the total amount of the (meth)acrylate compound (A) and the (meth)acrylate compound (B). When the content of the antioxidant (C-2) exceeds 5 parts by mass with respect to 100 parts by mass of the total amount of the (meth)acrylate compound (A) and the (meth)acrylate compound (B), a resin made of the composition may undergo a reduction in its transparency, or deformation or cracking due to heat in association with the vaporization of the antioxidant (C-2). When the content is less than 0.01 part by mass, no effect on heat can be exerted, and hence the resin may turn yellow, or may undergo the deformation or cracking.

The aliphatic compound (C-3) represented by the general formula (VI) of the invention 4 imparts releasability to each of the (meth)acrylate compound (A) and the (meth)acrylate compound (B).
The aliphatic compound (C-3) dissolves in the (meth) acrylate compound (A) or the (meth)acrylate compound (B) to disperse well. Further, the compound easily attains a molecular motion because the compound is in a low-viscosity molten state upon curing. In addition, at the time of the curing, the compound is repelled from a resin component to be cured so as to exist between a mold and the cured component. As a result, the compound has releasability. In addition, the releasability can be additionally improved when the compound is in a molten state and has a low viscosity at the time of release.
In view of the foregoing, the aliphatic compound (C-3) has a melting point in the range of preferably -40°C to 140°C, more preferably -30°C to 130°C. When the melting point of the aliphatic compound (C-3) is set to -40°C or more, an external appearance failure is prevented from occurring owing to the generation of air bubbles and the like in a product as a result of the vaporization of the compound at the time of the curing, and good releasability is expressed. In addition, when the melting point of the aliphatic compound (C-3) is set to 140°C or less, its solubility is improved, and hence a good external appearance and good releasability are obtained.

The aliphatic hydrocarbon group represented by R⁴ of the aliphatic compound (C-3) represented by the general formula (VI) may be of a linear structure or a branched structure, and a bonding state in a molecular chain thereof may be formed only of a single bond, or may include a multiple bond. The group is specifically an aliphatic, saturated hydrocarbon group or an aliphatic, unsaturated hydrocarbon group. The number of multiple bonds in the aliphatic, unsaturated hydrocarbon group may be one, or may be two or more.
The hydrocarbon group represented by R⁴ has 6 to 30 carbon atoms. When the number of carbon atoms is smaller than 6, such a trouble as described below may occur owing to, for example, the volatilization of the compound at the time of the curing. The aliphatic compound (C-3) cannot exist between the mold and the material, and hence the releasability is not expressed. Alternatively, air bubbles remain in the material. When the number of carbon atoms is larger than 30, the mobility of the material reduces. As a result, the aliphatic compound (C-3) is taken in the material to make the material opaque, or the releasability is not expressed. The hydrocarbon group represented by R⁴ has preferably 6 to 26, more preferably 8 to 22 carbon atoms.

Examples of the metal atom represented by W of the aliphatic compound (C-3) represented by the general formula (VI) include alkali metals such as lithium and sodium, alkaline earth metals such as magnesium and calcium, and aluminum. When the metal atom belongs to Group 2 or is aluminum, the metal atom is divalent or more. Accordingly, the general formula for the aliphatic compound (C-3) is represented by (R⁴-CO-O)_{q-1}W wherein q represents 2 to 4.

The hydrocarbon group represented by W of the aliphatic compound (C-3) represented by the general formula (VI) may be of a linear structure or a branched structure, and a bonding state in a molecular chain thereof may be formed only of a single bond, or may include a multiple bond. The group is specifically an aliphatic, saturated hydrocarbon group or an aliphatic, unsaturated hydrocarbon group. The number of multiple bonds in the aliphatic, unsaturated hydrocarbon group may be one, or may be two or more. The hydrocarbon group represented by W has 1 to 8 carbon atoms. When the number of carbon atoms is 9 or more, an increase in the melting point, or a reduction in the solubility, of the aliphatic compound (C-3) is induced, and hence the aliphatic compound (C-3) is taken or unevenly distributed in the resin component at the time of the curing. As a result, the releasability is not expressed, Or the resin component becomes opaque in same cases. The hydrocarbon group represented by W preferably has 1 to 6 carbon atoms.

It should be noted that when W of the aliphatic compound (C-3) represented by the general formula (VI) represents a hydrogen atom, R⁴ preferably represents an aliphatic hydrocarbon group having 6 to 20 carbon atoms in order that good releasabilitymay be expressed. In addition, when W represents a metal atom, R⁴ preferably represents an aliphatic hydrocarbon group having 6 to 18 carbon atoms. When W represents a hydrocarbon group, the total number of carbon atoms of the hydrocarbon groups represented by R⁴ and W is preferably 7 to 30.

The content of the aliphatic compound (C-3) in the raw material composition used for a resin for an optical component of the invention 4 is 0.01 to 10 parts by mass, preferably 0.01 to 5 parts by mass with respect to 100 parts by mass of the total amount of the (meth) acrylate compound (A) and the (meth) acrylate compound (B). When the content of the aliphatic compound (C-3) exceeds 10 parts by mass with respect to 100 parts by mass of the total amount of the (meth) acrylate compound (A) and the (meth) acrylate compound (B), the transferability of a mold shape or the shape stability of the resultant resin against heat may not be maintained. When the content is less than 0. 01 part by mass, the releasability cannot be obtained.

An antioxidant is incorporated as required into the raw material composition used for a resin for an optical component in each of the inventions 1, 2, and 4. Examples of the antioxidant include a hindered phenol-based antioxidant, a phosphorous-based antioxidant, a sulfur-based antioxidant, a thioether-based antioxidant, a vitamin-based antioxidant, a lactone-based antioxidant, and an amine-based antioxidant.
Examples of the hindered phenol-based antioxidant, the phosphorus-based antioxidant, and the lactone-based antioxidant include those described in the invention 3.

Examples of the sulfur-based antioxidants include commercially available products such as DSTP "Yoshitomi" (manufactured by API Corporation, trademark), DLTP "Yoshitomi" (manufactured by API Corporation, trademark), DLTOIB (manufactured by API Corporation, trademark), DMTP "Yoshitomi" (manufactured by API Corporation, trademark), a Seenox 412S (manufactured by SHIPRO KASEI KAISHA, LTD., trademark), a Cyanox 1212 (manufactured by American Cyanamid Company, trademark), and a TP-D, a TPS, a TPM, and a TPL-R (manufactured by Sumitomo Chemical Co. , Ltd., trademark) .
Examples of the vitamin-based antioxidants include commercially available products such as a tocopherol (manufactured byEisaiCo., Ltd.) andanIrganoxE201 (manufactured by Ciba Specialty Chemicals Inc., trademark, compound name: 2,5,7,8-tetramethyl-2(4',8',12'-trimethyltridecyl)coumarone-6-ol).

Examples of the thioether-based antioxidant include commercially available products such as an Adekastab AO-412S (manufactured by ADEKA CORPORATION, trademark) and an Adekastab AO-503 (manufactured by ADEKA CORPORATION, trademark).

Examples of the amine-based antioxidants include commercially available products such as an Irgastab FS042 (manufactured by Ciba Specialty Chemicals Inc., trademark) and a GENOX EP (manufactured by Crompton Corporation, trademark, compound name: dialkyl-N-methylamine oxide).
One kind of antioxidant may be used alone, or two or more kinds thereof may be used in combination.

The content of the antioxidant in each of the inventions 1, 2, and 4 is typically 0.01 to 10 parts by mass, preferably 0.01 to 5 parts by mass, more preferably 0.02 to 2 parts by mass with respect to 100 parts by mass of the total amount of the compound (A) and the compound (B) in each of the inventions 1 and 4, or 100 parts by mass of the total amount of the compound (A), the compound (B), and the compound (C-1) in the invention 2 from the viewpoint of the suppression of reductions in the transparency and yellowing resistance of a resin material for an optical component.

The raw material composition used for a resin for an optical component (which may hereinafter be referred to as "raw material composition") of the present invention can be blended with a radical polymerization initiator as required.
Examples of the thermal radical polymerization initiator which cleaves to generate initial radicals with heat include ketone peroxides such as methyl ethyl ketone peroxide, methyl isobutyl ketone peroxide, acetylacetone peroxide, cyclohexanone peroxide, and methylcyclohexanone peroxide; hydroperoxides such as 1,1,3,3-tetramethylbutylhydroperoxide, cumene hydroperoxide, and t-butyl hydroperoxide; diacyl peroxides such as diisobutyryl peroxide, bis-3,5,5-trimethylhexanol peroxide, lauroyl peroxide, benzoyl peroxide, and m-toluoylbenzoylperoxide; dialkyl peroxides such as dicumyl peroxide, 2,5-dimethyl-2,5-di(t-butylperoxy)hexane, 1,3-bis(t-butylperoxyisopropyl)hexane, t-butyl cumyl peroxide, di-t-butyl peroxide, and 2,5-dimethyl-2,5-di(t-butylperoxy)hexene; peroxyketals such as 1,1-di(t-butylperoxy-3,5,5-trimethyl)cyclohexane, 1,1-di-t-butylperoxycyclohexane, and 2,2-di(t-butylperoxy)butane; alkylperesters such as 1,1,3,3-tetramethylbutylperoxyneodicarbonate, α-cumylperoxyneodicarbonate, t-butylperoxyneodicarbonate, t-hexyl peroxypivalate, t-butyl peroxypivalate, 1,1,3,3-tetramethylbutyl peroxy-2-ethylhexanoate, t-amyl peroxy-2-ethylhexanoate, t-butylperoxy-2-ethylhexanoate, t-butyl peroxyisobutyrate, di-t-butyl peroxyhexahydroterephthalate, 1,1,3,3-tetramethylbutyl peroxy-3,5,5-trimethylhexanoate, t-amyl peroxy-3,5,5-trimethylhexanoate, t-butyl peroxy-3,5,5-trimethylhexanoate, t-butyl peroxyacetate, t-butyl peroxybenzoate, and dibutyl peroxytrimethyladipate; peroxycarbonates such as di-3-methoxybutyl peroxydicarbonate, di-2-ethylhexyl peroxydicarbonate, bis(1,1-butylcyclohexaoxy dicarbonate), diisopropyloxy dicarbonate, t-amylperoxy isopropyl carbonate, t-butylperoxy isopropyl carbonate, t-butylperoxy-2-ethylhexyl carbonate, and 1,6-bis(t-butylperoxycarboxy)hexane; and 1,1-bis(t-hexylperoxy)cyclohexane and (4-t-butylcyclohexyl)peroxydicarbonate.

As radical polymerization initiators other than the above-mentioned radical polymerization initiators, radical polymerization initiators which generate initiator radicals with light, electron beam, or radiation may also be used.
Examples of such radical polymerization initiators include a benzoin ether, 2,2-dimethoxy-1,2-diphenylethane-1-one (IRGACURE 651, manufactured by Ciba Specialty Chemicals Inc., trademark), 1-hydroxy-cyclohexyl-phenyl-ketone (IRGACURE 184, manufactured by Ciba Specialty Chemicals Inc., trademark), 2-hydroxy-2-methyl-1-phenyl-propane-1-one (DAROCUR 1173, manufactured by Ciba Specialty Chemicals Inc., trademark), 1-[4-(2-hydroxyethoxy)-phenyl]-2-hydroxy-2-methyl-1-propane-1-one (IRGACURE 2959, manufactured by Ciba Specialty Chemicals Inc., trademark), 2-hydroxy-1-[4-[4-(2-hydroxy-2-methyl-propionyl)-benzyl]phenyl ]-2-methyl-propane-1-one (IRGACURE 127, manufactured by Ciba Specialty Chemicals Inc., trademark), 2-methyl-1-(4-methylthiophenyl)-2-morphorinopropane-1-one (IRGACURE 907, manufactured by Ciba Specialty Chemicals Inc., trademark), 2-benzyl-2-dimethylamino-1-(4-morphorinophenyl)-butanone-1 (IRGACURE 369, manufactured by Ciba Specialty Chemicals Inc., trademark), 2-(dimethylamino)-2-[(4-methylphenyl)methyl]-1-[4-(4-morpholin o)phenyl]-1-butanone (IRGACURE 379, manufactured by Ciba Specialty Chemicals Inc., trademark), 2,4,6-trimethylbenzoyl-diphenyl-phosphineoxide (DAROCUR TPO, manufactured by Ciba Specialty Chemicals Inc., trademark), bis(2,4,6-trimethylbenzoyl)-phenylphosphineoxide (IRGACURE 819, manufactured by Ciba Specialty Chemicals Inc., trademark), bis(η⁵-2,4-cyclopentadiene-1-yl)-bis(2,6-difluoro-3-(1H-pyrrole -1-yl)-phenyl)titanium (IRGACURE 784, manufactured by Ciba Specialty Chemicals Inc., trademark), 1,2-octanedione, 1-[4-(phenylthio)-, 2-(O-benzoyloxime)] (IRGACURE OXE 01, manufactured by Ciba Specialty Chemicals Inc., trademark), ethanone, 1-[9-ethyl-6-(2-methylbenzoyl)-9H-carbazole-3-yl]-, 1-(O-acetyloxime) (IRGACURE OXE 02, manufactured by Ciba Specialty Chemicals Inc., trademark).
One kind of radical polymerization initiator may be used alone, or two or more kinds thereof may be used in combination.

The usage of the radical polymerization initiator is generally about 0.01 to 10 parts by mass, preferably 0.05 to 5 parts by mass with respect to 100 parts by mass of the total amount of the compound (A) and the compound (B) in each of the Inventions 1, 3, and 4, or 100 parts by mass of the total amount of the compound (A), the compound (B), and the compound (C-1) in the Invention 2. In the case where the polymerization is initiated by heat, a raw material composition containing the radical polymerization initiator may generally be polymerized by heating to about 40 to 200°C. In the case where the polymerization is initiated by light, the raw material composition may be polymerized by being irradiated with ultraviolet light or visible light using, for example, a Mercury Xenon lamp as a light source.

The raw material composition of the present invention may be blended with, in addition to the above-mentioned antioxidants, a lubricant, a light stabilizer, an ultraviolet absorber, a plasticizer, an antistatic agent, an inorganic filler, a coloring agent, an antistatic agent, a mold release agent, a flame retardant, and a component intended for an improvement in adhesiveness with the inorganic compound such as titanium oxide or silicon oxide if necessary.
As the lubricant, there can be used a metal salt of higher dicarboxylic acid, an ester of higher carboxylic acid, and the like.

A known light stabilizer may be used as the light stabilizer, and preferred is a hindered amine-based light stabilizer. Specific examples of the hindered amine-based light stabilizer include an ADKSTAB LA-77, an ADKSTAB LA-57, an ADKSTAB LA-52, an ADKSTAB LA-62, an ADKSTAB LA-67, an ADKSTAB LA-68, an ADKSTAB LA-63, an ADKSTAB LA-94, an ADKSTAB LA-82, and an ADKSTAB LA-87 (all of which are manufactured by ADEKA CORPORATION); aTinuvin 123, a Tinuvin 144, a Tinuvin 440, a Tinuvin 662, a Chimassorb 2020, a Chimassorb 119, a Chimassorb 944 (all of which are manufactured by Ciba Specialty Chemicals Inc.), a Hostavin N30 (manufactured by Hoechst GmbH), a Cyasorb UV-3346; a Cyasorb UV-3526 (both of which are manufactured by Cytec Industries Inc.), a Uval 299 (GLC), and a Sanduvor PR-31 (Clariant). One kind of light stabilizer may be used alone, or two or more kinds thereof may be used in combination.
The usage of the light stabilizer is generally about 0.005 to 5 parts by mass, preferably 0.02 to 2 parts by mass with respect to 100 parts by mass of the total amount of the compound (A) and the compound (B) in each of the Inventions 1, 3, and 4, or 100 parts by mass of the total amount of the compound (A), the compound (B), and the compound (C-1) in the Invention 2.
Examples of the component intended for an improvement in adhesiveness with the inorganic compound such as titanium oxide or silicon oxide include silane coupling agents including methacryloxy groups and acryloxy groups of silane compounds. An optical component may be polymerized and molded by incorporating the component into the above-mentioned raw material composition.

The optical component of the present invention can be produced by polymerizing and molding the above-mentioned raw material composition. Upon polymerization of the raw material composition, prepolymerization may be performed by adding the above-mentioned radical polymerization initiator to a monomer component containing compound (A) as the main component. The viscosity of the raw material composition can be controlled by performing such prepolymerization.

As the method for polymerizing and molding, the same method as in conventional molding of thermosetting resins may be employed. The method is, for example, a method involving polymerizing and molding the above-mentioned raw material composition or a prepolymerized material thereof by liquid resin injection molding, compression molding, transfer molding, insert molding, or the like. In addition, molded products can be obtained by potting or coating. Further, the molded products can be also obtained by the same method as in molding of light curable resins, for example, UV cure molding.

The optical component of the present invention is preferably produced by a liquid resin molding method. Examples of the liquid resin molding method include: liquid resin injection molding which involves loading under pressure a liquid raw material composition or a liquid prepolymerized material thereof at ordinary temperature into a hot mold, and thermally curing the resultant; compression molding which involves charging a liquid raw material composition into a mold and pressing to cure the resultant; and transfer molding which involves loading under pressure a liquid raw material composition that has been warmed into a mold to cure the resultant.

### Examples

Hereinafter, the present invention is described more specifically by way of examples. However, the present invention is by no means limited to those examples.
Resins obtained in the following examples and comparative examples were evaluated as described below.

### (1) Presence or absence of crack after heat history (including heat resistance test)

The following heat resistance test was performed using the plate-like body samples of the resin obtained in the examples and comparative examples each of which was 2 mm thick, 25 mm long, and 25 mm wide.

### A: Inventions 1 and 4

The three plate-like bodies were placed on a 3 mm-thick stainless steel plate, and left to stand for 10 minutes at 250°C. After that, the presence or absence of cracks in the plate-like bodies was checked, and the results were evaluated by the following criteria.
○: No cracks occurred.
Δ: Cracks each of which was equal to or more than 10 mm long occurred in two or less of the plate-like bodies, or all the cracks occurred were less than 10 mm long.
×: Cracks each of which was equal to or more than 10 mm long occurred in all of the three plate-like bodies.

### B: Inventions 2 and 3

### (In case of heat history 1)

The same operations as those of the above-mentioned inventions 1 and 4 were performed. It should be noted that a history corresponding to the description "three plate-like bodies were placed on a 3 mm-thick stainless steel plate, and left to stand for 10 minutes at 250°C. After that ... " is defined as "heat history 1".

### (In case of heat history 2)

Three samples each having a surface temperature of 30°C or less were placed in a heat step furnace (TAS20-15N manufactured by Tamura Corporation) whose temperatures were 175°C, 200°C, and 280°C, and were then moved at an equal speed over 450 seconds from the inlet of the heat furnace to its outlet while being mounted on a conveyor. A temperature pattern is such that a time period for which the temperature of each sample surface is 200°C or more is 220 seconds or more, and out of the period, a time period for which the temperature is 250°C or more is 20 seconds or more.

The foregoing cycle was repeated five times (the foregoing history is referred to as "heat history 2"). After that, each sample was evaluated for its presence or absence of cracks by the following criteria.
○: No cracks occurred.
Δ: Cracks each of which was equal to or more than 10 mm long occurred in two or less of the plate-like bodies, or all the cracks occurred were less than 10 mm long.
×: Cracks each of which was equal to or more than 10 mm long occurred in all of the three plate-like bodies.

### (2) Shape stability evaluation

The same three plate-like bodies each of which was 2 mm thick, 25 mm long, and 25 mm wide were used. Those plate-like bodies were placed on a 3 mm-thick stainless steel plate, and left to stand for 10 minutes at 250°C. After that, the degree of deformation of the marginal parts of the plate-like bodies was visually observed, and the results were evaluated by the following criteria.
○: The marginal parts remained the same as before the heat history, and thus, the plate-like bodies were considered to be excellent in shape stability.
Δ: The marginal parts were partially rounded, and thus, the shape stability of the plate-like bodies was considered to be normal.
×: The marginal parts were uniformly rounded, and thus, the plate-like bodies were considered to be inferior in shape stability.
It should be noted that the evaluation is performed "after the heat history 1" in the Inventions 2 and 3.

### (3) Light transmittance

The light transmittance (unit: %) was measured in accordance with JIS K7105 using test pieces each having a thickness of 3 mm. A HGM-2DP (manufactured by Suga Test Instruments Co., Ltd.) was used as the measuring device.
The measurement was carried out for the light transmittance evaluated of a test piece before placing in an oven (initial properties) and after the heat history 2.
An evaluation for the light transmittance was performed as described below.
(a) Initial total light transmittance:
   A light transmittance (%) before the test piece is placed in the oven
(b) Amount of reduction in total light transmittance (Δ250°C total light transmittance): The absolute value (%) of a difference between the initial light transmittance and the total light transmittance after the heat history 2

### (4) Yellowing factor (YI value)

The YI value of a test piece measuring 30 mm long by 30 mm wide by 3 mm thick was measured with an apparatus SZ optical SENSOR (manufactured by NIPPON DENSHOKU INDUSTRIES CO., LTD.).

An evaluation for the yellowing factor (YI value) was performed as described below.
(a) Initial yellowing factor (initial YI value):
   A YI value before the test piece is placed in an oven
(b) Amount of reduction in YI value (Δ250°C YI value):
   The absolute value of a difference between the initial YI value and a YI value after the heat history 2

### (5) Water content (in case of invention 1)

A sample was dried in an 80°C state for 7 days, and then its mass was measured. The value was defined as "dry mass". The resultant dried sample was left to stand in a high-temperature thermostat having a temperature of 65°C and an absolute humidity of 85% for 14 days. After that, the mass of the sample ("water-containing mass") was measured, and then a water content was calculated from the following equation. $Water content \left(%\right) = \left(\left("water-containing mass"-"dry mass"\right)/"dry mass"\right) \times 100$

### (6) Coefficient of linear expansion (in case of invention 1)

Linear expansion was measured with a linear expansion-measuring apparatus (manufactured by Seiko Instruments Inc.: TMA/SS6100) by a compression method under a load of 49 mN in the temperature range of 40 to 80°C, and then a coefficient of linear expansion was calculated.

### (7) Adhesiveness (in case of invention 2)

### (Production of sample)

Liquid resins obtained in the examples and comparative examples were each cured in an oven in a nitrogen atmosphere at 110°C over 3 hours and then at 160°C over 1 hour by dropping the curing liquid onto each of three preparation glasses. After that, the surface onto which the curing liquid had been dropped was provided with lattice-like slits at longitudinal and horizontal intervals of 5 mm each with a cutter knife. The number of slits was four or more for a short side of each preparation glass, and was ten or more for a long side thereof.

### (Tape adhesiveness: tape peel test)

A cellophane tape (CT24 manufactured by Nichiban Co., Ltd.) was caused to adhere to the film of the sample produced as described above with the ball of a finger, and was then peeled. The case where the cured layer did not peel was represented as o, and the case where the layer peeled was represented as ×.

### (Heat-resistant adhesiveness)

The sample produced as described above was placed in an oven at 270°C for 10 minutes, and then an evaluation for adhesion upon reception of a heat history was performed on the basis of the manner in which the cured layer changed by the following criteria.
○: None of the three glasses causes the cracking or peeling of the cured product.
×: The cracking or peeling of the cured product occurs from a glass.

### (8) Bending modulus (in case of invention 2)

The bending modulus of a test piece measuring 100 mm long by 10 mm wide by 3 mm thick was calculated with a testing machine (INSTRON 5567 manufactured by Instron Japan Company, Ltd.) at a distance between fulcrums of 50 mm, a temperature of 23°C, a testing rate of 1.5 (mm/min), and a deflection factor of 1% under a deflection load which was needed to deflect the test piece by 1%.

### (9) Solubility (in cases of inventions 3 and 4)

Such a solution that 0.1 g of the antioxidant (C-2) is added to 10 g of an adamantane acrylate compound is prepared. The solution is stirred at room temperature for 20 minutes. When the antioxidant does not dissolve, the mixture may be heated to a temperature in a range with an upper limit of 80°C. The solution is left to stand at room temperature for 60 minutes, and then an evaluation for solubility is performed on the basis of the state of the solution at that time.
With regard to a judgment on the solubility, the case where the solution was colorless and transparent was evaluated as o, the case where the solution was not colorless or transparent, but was free of a precipitate and in a suspended state was evaluated as Δ, and any other case was evaluated as ×.

### (10) Mass reduction amount (in case of invention 3)

A mass reduction amount (%) with respect to the mass (W₀) of the initial sample was measured from the following equation by measuring a mass (W₁) after the above-mentioned heat history 2. $Mass reduction amount \left(%\right) = \left(\left({W}_{1}-{W}_{0}\right)/{W}_{1}\right) \times 100$

### (11) Releasability (in case of invention 4)

In each of molding methods A and B to be described later, five cured products were produced, and after the curing, a stainless sheet was removed. Then, an evaluation for releasability was performed on the basis of the extent to which the stainless sheet adhered to each cured product when the sheet was taken out. In a molding method C, an evaluation for releasability was performed on the basis of a feeling of resistance when a flat plate was taken out of a mold after mold opening.
The evaluation for releasability was performed by two judges, and judgement criteria were as described below.

### (In cases of molding methods A and B)

○: Each of the two judges was able to peel the stainless sheet from each cured product without any feeling of resistance upon peeling of the sheet.
Δ: Only one of the judges was able to peel the stainless sheet from each curedproduct without any feeling of resistance upon peeling of the sheet.
×: Each of the two judges had a feeling of resistance upon peeling of the stainless sheet from each cured product, or an affix remained on the sheet.

### (In case of molding method C)

○: None of the two judges had any feeling of resistance when taking out a cured product from a mold, and each of the judges was able to take out the molded article without the cracking of the molded article in a state of sticking to the mold.
Δ: Only one of the judges had no feeling of resistance when taking out a cured product from a mold, and the judge was able to take out the molded article without the cracking of the molded article in a state of sticking to the mold.
×: Each of the two judges had a feeling of resistance when taking out a cured product from a mold, or the cured product cracked when taken out because the cured product stuck to the mold.

It should be noted that molding methods in the examples and comparative examples were performed as described below.

### (Molding method A)

Two mirror-finished aluminum sheets each measuring 70 mm long by 70 mm wide by 0.3 m thick were interposed between two stainless sheets each measuring 70 mm long by 70 mm wide by 3 mm thick. Then, a spacer made of Teflon (registered trademark) measuring 70 mm long by 70 mm wide by 3 mm thick was interposed between the aluminum sheets. Then, resin molding was performed with the container thus obtained.
A liquid raw material composition was flowed into the above-mentioned container so that a cured product was obtained. The spacer portion made of Teflon (registered trademark) was provided with a window measuring 30 mm long by 30 mm wide by 3 mm thick and a path through which the raw material composition could be flowed into the window. The curing liquid was flowed into the container, and then the container was held lest the liquid should leak. After that, polymerization and molding were performed by heating the resultant in an oven under a nitrogen atmosphere (having an oxygen concentration of 5 vol% or less) at 110°C for 3 hours and then at 160°C for 1 hour. After that, the resultant was cooled to room temperature. Thus, a colorless, transparent plate-like body was obtained.
It should be noted that when the surface of the product sank and hence was not flat, the surface was flattened by being abraded with emery paper or an abrasive before the product was used in evaluations for optical characteristics.
The test piece for a bending modulus was produced with a spacer measuring 100 mm long by 10 mm wide by 3 mm thick as the spacer portion. Sheets each measuring 110 mm long by 50 mm wide by 3 mm thick were used as the stainless sheets between which the spacer was interposed. The thickness of each of aluminum sheets used was 0.3 mm, and the length and width dimensions thereof were the same as those of each stainless sheet. A curing method and conditions for the method were the same as those in the case where the above-mentioned flat plate was produced.

### (Molding method B)

The same operations as those of the molding method A were performed except that curing was performed by heating at a temperature of 100°C for 3 hours and then at a temperature of 160°C for 1 hour.

### (Molding method C)

A raw material composition was polymerized and molded with a liquid resin-sealing apparatus (manufactured by APIC YAMADA CORPORATION). Thus, a plate-like cured product was obtained. The cured product was a flat plate of sizes measuring 50 mm long by 50 mm wide by 2 mm thick.
The surface of the mold is plated with hard chromium. Conditions for the polymerization and molding were a mold temperature of 140°C and a curing time of 3 minutes. A dwelling at the time of the curing was 5 MPa. The resultant cured product was heated at 160°C for 1 hour, and was then slowly cooled at room temperature. Thus, a colorless, transparent plate-like body was obtained.

### Production Example 1 (synthesis of 1,3-adamantane dimethanol dimethacrylate)

1,3-Adamantane dimethanol (100 g, 0.51 mol) methacrylic acid (110.2 g, 1.28 mol), 98-mass% sulfuric acid (4.60 g, 0.046 mol), methoquinone (0.092 g, 1,000 wt ppm with respect to acrylic acid), and 1,000 mL of toluene were loaded into a 2,000-mL four-necked flask equipped with a stirring blade, a Dean-Stark condenser, a temperature indicator, and a three-way cock.
The flask was heated and stirred in an oil bath at 130°C, and then a reaction was performed for 3 hours while water was removed from the inside of the reaction system by azeotropy. After having been cooled to around room temperature, the resultant was transferred to a separating funnel, and was then washed with a 5-mass% aqueous solution of NaCl, a 5-mass aqueous solution of Na₃PO₄, and a 5-mass% aqueous solution of NaCl in the stated order. The organic layer was separated and dehydrated with magnesium sulfate, and then toluene was removed by distillation at 40°C. Thus, 1,3-adamantane dimethanol dimethacrylate represented by the following chemical formula as a target was obtained (86% yield, GC purity: 97 mass%).

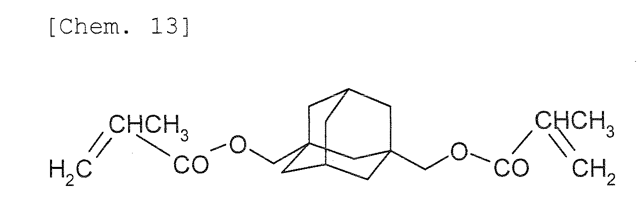

### Example 1 (Invention 1)

To 20 parts by mass of 1-adamantyl methacrylate (manufactured by Osaka Organic Chemical Industry Ltd.) represented by the following chemical formula and 80 parts by mass of tricyclodecane dimethanol diacrylate (manufactured by Shin-Nakamura Chemical Co., Ltd.: NK ESTER A-DCP) as the compound (A), 0.5 parts by mass of an Irganox 1076 (manufactured by Ciba Specialty Chemicals Inc.) as the antioxidant, and 0.4 part by mass of a PERHEXA HC (manufactured by NOF Corporation) as the polymerization initiator were added and mixed to obtain a raw material composition. The raw material composition was molded into a form suitable for the above-mentioned evaluation method by using the molding method A. Table 1 shows the results of the evaluations.

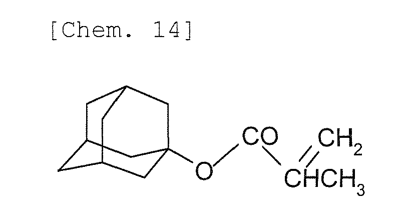

### Examples 2 to 11 and Comparative Examples 1 to 5

In the same manner as in Example 1, optical resins were produced by the molding methods by using the compound (A), the compound (B), an antioxidant, and a polymerization initiator in amounts shown in Table 1 and Table 2, and then the resultant resins were evaluated. It should be noted that 1,3-adamantane dimethanol dimethacrylate obtained in Production Example 1 described above was used as the compound (A) in Example 3, and isobornyl methacrylate (manufactured by Wako Pure Chemical Industries, Ltd.) was used as the compound in Comparative Example 2. Table 1 and Table 2 show the results of the evaluations.

[Table 1]

**Table 1**

| | Example 1 | Example 2 | Example 3 | Example 4 | Example 5 | Example 6 | Example 7 | Example 8 |
|---|---|---|---|---|---|---|---|---|
| Raw material composition (mass%) | | | | | | | | |
| Compound (A) | | | | | | | | |
| 1-Adamantyl methacrylate (n=1) | 20 | 40 | 30 | 30 | 30 | 30 | 30 | 30 |
| A-DCP (n=2) | 80 | 60 | 50 | 65 | | | 50 | 50 |
| DCP (n=2) | | | | | 50 | | | |
| 1,3-Adamantyl dimethanol dimethacrylate (n=2) | | | | | | 50 | | |
| Compound (B) | | | | | | | | |
| SR-499 (m=3) | | | 20 | 5 | 20 | 20 | 20 | 20 |
| Antioxidant: Irganox 1076 (part(s) by mass) | 0.5 | 0.5 | | 0.5 | 0.5 | 0.5 | 0.5 | 0.5 |
| Polymerization inhibitor: PERHEXA HC (part(s) by mass) | 0.4 | 0.4 | 0.4 | 0.4 | 0.4 | 0.4 | | 0.4 |
| PEROYL L (part(s) by mass) | | | | | | | 0.4 | |
| Ratio of compound wherein n represents 1 in general formula (I) in compound (A) +compound (B) (mass%) | | | | | | | | |
| | 20 | 40 | 30 | 30 | 30 | 30 | 30 | 30 |
| Ratio of compound wherein n represents 1 in general formula (I) in compound (A) (mass%) | | | | | | | | |
| | 20 | 40 | 37.5 | 31.6 | 37.5 | 37.5 | 37.5 | 37.5 |
| Molding method | A | A | A | A | A | A | B | A |
| Total curing time (minute(s)) | 240 | 240 | 240 | 240 | 240 | 240 | 240 | 240 |
| Results of evaluations | | | | | | | | |
| (1) Presence or absence of cracks after heat history | Δ | Δ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.7 | 1.6 | 1.6 | 1.6 | 1.6 |
| Amount of reduction in YI value (Δ250°C YI value) | 1 | 0 | 0 | 1 | 1 | 0 | 0 | 0 |
| (5) Water content (ppm) | 0.5 | 0.5 | 0.8 | 0.7 | 0.8 | 0.8 | 0.8 | 0.8 |
| (6) Coefficient of linear expansion (%) | 70 | 70 | 75 | 73 | 75 | 75 | 75 | 76 |

[Table 2]

**Table 2**

| | Example 9 | Example 10 | Example 11 | Comparative Example : 1 | Comparative Example 2 | Comparative Example 3 | Comparative Example 4 | Comparative Example 5 |
|---|---|---|---|---|---|---|---|---|
| Raw material composition (mass%) | | | | | | | | |
| Compound (A) | | | | | | | | |
| 1-Adamantyl methacrylate (n=1) | 30 | 30 | 50 | 100 | | 70 | 70 | 60 |
| Isobornyl methacrylate (n=1) | | | | | 100 | | | |
| A-DCP (n=2) | 50 | 50 | | | | 30 | | |
| Compound (B) | | | | | | | | |
| SR-499 (m=3) | 20 | | | | | | 30 | |
| SR-399 (m=5) | | | 10 | | | | | 40 |
| SR-502 (m=3) | | 20 | 40 | | | | | |
| Antioxidant:Irganox1076 (part(s) by mass) | 0.5 | 0.5 | 0.5 | | | 0.5 | 0.5 | 0.5 |
| Polymerization inhibitor: PERHEXA HC (part(s) by mass) | | | | 0.5 | 0.5 | 0.5 | 0.5 | 0.5 |
| PEROYL HC (part(s) by mass) | 1.0 | 0.5 | 0.5 | | | | | |
| Ratio of compound wherein n represents 1 in general formula (I) in compound (A)+compound (B) (mass%) | | | | | | | | |
| | 30 | 30 | 50 | 100 | 100 | 70 | 70 | 60 |
| Ratio of compound wherein n represents 1 in general formula (I) in compound (A) (mass%) | | | | | | | | |
| | 37.5 | 37.5 | 100 | 100 | 100 | 70 | 100 | 100 |
| Molding method | C | A | A | A | B | A | A | A |
| Total curing time (minute(s)) | 3 | 240 | 240 | 240 | 240 | 240 | 240 | 240 |
| Results of evaluations | | | | | | | | |
| (1) Presence or absence of cracks after heat history | ○ | ○ | ○ | × | × | × | × | × |
| (2) Shape stability evaluation after heat history | ○ | ○ | ○ | × | × | × | × | × |
| (3) Light transmittance | | | | | | | | |
| Initial total light transmittance (%) | 93 | 93 | 93 | 93 | 89 | 93 | 93 | 93 |
| Amount of reduction in total light transmittance (%) | 0 | 0 | 0 | - | - | - | - | - |
| (4) Yellowing factor (YI value) | | | | | | | | |
| Initial YI value | 1.6 | 1.6 | 1.6 | 1.6 | 2.8 | 1.6 | 1.8 | 1.6 |
| Amount of reduction in YI value (Δ250°C YI value) | 1 | 0 | 0 | - | - | - | - | - |
| (5) Water content (ppm) | 0.8 | 0.9 | 0.9 | 0.5 | 0.9 | 0.7 | 1.3 | 1.0 |
| (6) Coefficient of linear expansion (%) | 76 | 80 | 95 | 75 | 80 | 75 | 110 | 100 |

As is apparent from the examples of Table 1 and Table 2, the use of the raw material composition used for a resin for an optical component of the invention 1 provides a resin that has excellent transparency, a low coefficient of linear expansion, and a low water content, causes no cracks, is stable against heat without causing yellowing, and is excellent in workability.
In contrast, each of Comparative Examples 1 to 5 in each of which the ratio of the compound wherein n represents 1 in the (meth) acrylate compounds (A) that can be represented by the general formula (I) is particularly large is excellent in initial total light transmittance and yellowing factor (YI value), and has a low coefficient of linear expansion and a low water content, but is found to be unsuitable as a raw material composition used for a resin for an optical component because the comparative examples cause cracks after a heat history and are poor in shape stability.

### Example 12 (invention 2)

30 Parts by mass of 1-adamantyl methacrylate (manufactured by Osaka Organic Chemical Industry Ltd.) and 50 parts by mass of tricyclodecane dimethanol diacrylate (manufactured by Shin-Nakamura Chemical Co. , Ltd. : NK ESTER A-DCP) as the compounds (A), 10 parts by mass of an SR-499 (manufactured by Sartomer Japan Inc.) as the compound (B), 10 parts by mass of 3- (trimethoxysilyl) propyl methacrylate (manufactured by Shin-Etsu Chemical Co., Ltd.: KBM-503) as the compound (C-1), and 0.4 part by mass of a PERHEXA HC (manufactured by NOF Corporation) as a polymerization initiator were loaded and mixed. Thus, arawmaterial composition was obtained. The raw material composition was molded by the molding method A into a shape suitable for the above-mentioned evaluation methods. Table 3 shows the results of the evaluations.

### Example 13

The same operations as those of Example 12 were performed except that: 0.5 part by mass of an Irganox 1076 (manufactured by Ciba Specialty Chemicals Inc.) was used as an antioxidant; 0. part by mass of a PERHEXA HC (manufactured by NOF Corporation) was used as a polymerization initiator; and the molding was performed by the molding method B. Table 3 shows the results of the evaluations.

### Example 14

The same operations as those of Example 12 were performed except that: 0. 5 part by mass of an Irganox 1076 was used as an antioxidant; 0.5 part by mass of a PEROYL L (manufactured by NOF Corporation) was used as a polymerization initiator; and the molding was performed by the molding method C. Table 3 shows the results of the evaluations.

### Examples 15 to 24

The same operations as those of Example 12 were performed except that the compound (A), the compound (B), the compound (C-1), an antioxidant, and a polymerization initiator shown in Table 3 and Table 4 were used. Table 3 and Table 4 show the results of the evaluations.

### Comparative Examples 6 to 11

The same operations as those of Example 12 were performed except that the compound (A), the compound (B), the compound (C-1), an antioxidant, and a polymerization initiator shown in Table 5 were used. Table 5 shows the results of the evaluations. It should be noted that isobornyl methacrylate (manufactured by Wako Pure Chemical Industries, Ltd.) was used as the compound (A) of Comparative Example 7.

[Table 3]

**Table 3**

| | Example 12 | Example 13 | Example 14 | Example 15 | Example 16 | Example 17 |
|---|---|---|---|---|---|---|
| Raw material composition (part(s) by mass) | | | | | | |
| Compound (A) | | | | | | |
| 1-Adamantyl methacrylate (n=1) | 30 | 30 | 30 | 20 | 30 | 30 |
| A-DCP (n=2) | 50 | 50 | 50 | 36 | 50 | 50 |
| Compound (B) | | | | | | |
| SR-499 (m=3) | 10 | 10 | 10 | 14 | 10 | 10 |
| Compound (C-1) | | | | | | |
| KBM-503 | 10 | 10 | 10 | 30 | | |
| KBE-502 | | | | | 10 | |
| KBM-5103 | | | | | | 10 |
| Antioxidant: Irganox 1076 | | 0.5 | 0.5 | 0.5 | 0.5 | 0.5 |
| Polymerization inhibitor: PERHEXA HC | 0.5 | 0.5 | | 1 | 0.5 | 0.5 |
| PEROYL L | | | 0.5 | | | |
| Molding method | A | B | C | A | A | A |
| Total curing time (minute(s)) | 240 | 240 | 3 | 240 | 240 | 240 |
| Results of evaluations | | | | | | |
| (1) Presence or absence of cracks after heat history | | | | | | |
| After heat history 1 | ○ | ○ | ○ | ○ | ○ | ○ |
| After heat history 2 | ○ | ○ | ○ | ○ | ○ | ○ |
| (2) Shape stability evaluation after heat history | ○ | ○ | ○ | ○ | ○ | ○ |
| (3) Light transmittance | | | | | | |
| Initial total light transmittance (%) | 93 | 93 | 93 | 93 | 93 | 93 |
| Amount of reduction after heat history 2 (%) | 0.5 | 0.3 | 0.3 | 0.3 | 0.3 | 0.3 |
| (4) Yellowing factor (YI value) | | | | | | |
| Initial YI value | 1.6 | 1.5 | 1.5 | 1.3 | 1.5 | 1.5 |
| Amount of reduction after heat history 2 | 2 | 1 | 1 | 1 | 1 | 1 |
| (5) Adhesiveness | | | | | | |
| Tape adhesiveness | ○ | ○ | ○ | ○ | ○ | ○ |
| Heat-resistant adhesiveness | ○ | ○ | ○ | ○ | ○ | ○ |
| (6) Bending modulus (MPa) | 2,600 | 2,600 | 2,600 | 2,600 | 2,600 | 2,600 |

[Table 4]

**Table 4**

| | Example 18 | Example 19 | Example 20 | Example 21 | Example 22 | Example 23 | Example 24 |
|---|---|---|---|---|---|---|---|
| Raw material composition (part (s) by mass) | | | | | | | |
| Compound (A) | | | | | | | |
| 1-Adamantyl methacrylate (n=1) | 30 | 30 | 25 | 25 | 45 | 45 | 30 |
| A-DCP (n=2) | 50 | | 65 | 60 | | | 69 |
| 1,3-Adamantane dimethanol dimethacrylate (n=2) | | 50 | | | | | |
| Compound (B) | | | | | | | |
| SR-499 (m=3) | 10 | 10 | | 5 | | | |
| SR-399 (m=5) | | | | | 10 | 10 | |
| SR-502 (m=3) | | | | | 35 | | |
| SR-415 (m=3) | | | | | | 35 | |
| Compound (C-1) | | | | | | | |
| KBM-503 | 10 | 10 | 10 | 10 | 10 | 10 | 1 |
| Antioxidant: Irganox 1076 | 0.5 | 0.5 | 0.5 | 0.5 | 0.5 | 0.75 | 0.5 |
| Irganox 3790 | | | | | | 0.25 | |
| Polymerization inhibitor: PERHEXA HC | 0.5 | 0.5 | 0.5 | 0.5 | 0.5 | 0.5 | 0.5 |
| Molding method | A | A | A | A | A | A | A |
| Total curing time (minute(s)) | 240 | 240 | 240 | 240 | 240 | 240 | 240 |
| Results of evaluations | | | | | | | |
| (1) Presence or absence of cracks after heat history | | | | | | | |
| After heat history 1 | ○ | ○ | ○ | ○ | ○ | ○ | ○ |
| After heat history 2 | ○ | ○ | ○ | ○ | ○ | ○ | ○ |
| (2) Shape stability evaluation after heat history | ○ | ○ | ○ | ○ | ○ | ○ | ○ |
| (3) Light transmittance | | | | | | | |
| Initial total light transmittance (%) | 93 | 93 | 93 | 93 | 93 | 93 | 93 |
| Amount of reduction after heat history 2 (%) | 0.3 | 0.3 | 0.3 | 0.3 | 0.3 | 0.3 | 0 |
| (4) Yellowing factor (YI value) | | | | | | | |
| Initial YI value | 1.6 | 1.5 | 1.7 | 1.7 | 2 | 2 | 1.8 |
| Amount of reduction after heat history 2 | 2 | 1 | 1 | 1 | 1 | 1 | 1 |
| (5) Adhesiveness | | | | | | | |
| Tape adhesiveness | ○ | ○ | ○ | ○ | ○ | ○ | ○ |
| Heat-resistant adhesiveness | ○ | ○ | ○ | ○ | ○ | ○ | × |
| (6) Bending modulus (MPa) | 2, 600 | 2,700 | 3,100 | 3,000 | 2,400 | 2,500 | 3,100 |

[Table 5]

**Table 5**

| | Comparati ve Example 6 | Comparati ve Example 7 | Comparati ve Example 8 | Comparati ve Example 9 | Comparati ve Example 10 | Comparati ve Example 11 |
|---|---|---|---|---|---|---|
| Raw material composition (part(s) by mass) | | | | | | |
| Compound (A) | | | | | | |
| 1-Adamantyl methacrylate (n=1) | 100 | | 30 | 30 | 50 | 10 |
| Isobornyl methacrylate (n=1) | | 100 | | | | |
| A-DCP (n=2) | | | 50 | 65 | | 30 |
| Compound (B) | | | | | | |
| SR-499 (m=3) | | | 20 | 5 | | 10 |
| SR-399 (m=5) | | | | | 10 | |
| SR-502 (m=3) | | | | | 40 | |
| Compound (C-1) | | | | | | |
| KBM-503 | | | | | | 50 |
| Antioxidant: Irganox 1076 | 0.5 | 0.5 | 0.5 | 0.5 | 0.5 | 0.5 |
| Polymerization inhibitor: PERHEXA HC | 0.5 | 0.5 | 0.5 | 0.5 | 0.5 | 0.5 |
| Molding method | A | A | A | A | A | A |
| Total curing time (minute(s)) | 240 | 240 | 240 | 240 | 240 | 240 |
| Results of evaluations | | | | | | |
| (1) Presence or absence of cracks after heat history | | | | | | |
| After heat history 1 | × | × | ○ | ○ | ○ | ○ |
| After heat history 2 | × | × | ○ | ○ | ○ | ○ |
| (2) Shape stability evaluation after heat history | × | × | ○ | ○ | ○ | ○ |
| (3) Light transmittance | | | | | | |
| Initial total light transmittance (%) | 93 | 90 | 93 | 93 | 93 | 93 |
| Amount of reduction after heat history 2 (%) | - | - | 0 | 0 | 0 | 0 |
| (4) Yellowing factor (YI value) | | | | | | |
| Initial YI value | 1.6 | 2.8 | 1.6 | 1.6 | 1.8 | 1.5 |
| Amount of reduction after heat history 2 | - | - | 1 | 1 | 2 | 1 |
| (5) Adhesiveness | | | | | | |
| Tape adhesiveness | × | × | ○ | ○ | ○ | ○ |
| Heat-resistant adhesiveness | × | × | × | × | × | × |
| (6) Bending modulus (MPa) | - | 3,000 | 2,700 | 3,300 | 2,600 | 1, 300 |

As is apparent from the foregoing examples and comparative examples, each of all examples of the invention 2 causes no cracks after a heat history, is excellent in shape stability, has an excellently stable transparency and a low initial yellowing factor (YI Value), shows a small increase in its YI value even when heated, and is excellent in adhesiveness.
In contrast, each of Comparative Examples 6 and 7 causes cracks after a heat history, and is poor in shape stability and adhesiveness. Each of Comparative Examples 8 to 11 causes no cracks and has good shape stability, but is poor in tape adhesiveness.
The raw material composition of the invention 2 is found to provide a resin for an optical component that has excellent transparency, causes no cracks, is excellent in shape stability, is stable against heat without causing yellowing, and is excellent in peeling resistance of a coating layer (tape adhesiveness) and heat-resistant adhesiveness with an inorganic material while maintaining a bending modulus.

### Examples 25 to 38 (invention 3)

Compounds (C1) to (C10) shown in Table 6 each serving as the antioxidant (C-2) were added to and mixed with 30 parts by mass of 1-adamantyl methacrylate (manufactured by Osaka Organic Chemical Industry Ltd.) and 45 parts by mass of 1,3-adamantane dimethanol dimethacrylate obtained in Production Example 1 described above as the compounds (A), and 25 parts by mass of an SR-499 (manufactured by Sartomer Japan Inc.) as the compound (B). Thus, raw material compositions were obtained.
Two stainless sheets each measuring 70 mm long by 70 mm wide by 0.1 m thick were interposed between two stainless sheets each measuring 70 mm long by 70 mm wide by 3 mm thick. Then, a spacer made of Teflon (registered trademark) measuring 70 mm long by 70 mm wide by 3 mm thick was interposed between the sheets. Then, a resin was molded out of each of the raw material compositions with the container thus obtained.
A liquid raw material composition was flowed into the above-mentioned container so that a cured product was obtained. The spacer portion made of Teflon (registered trademark) was provided with a window measuring 30 mm long by 30 mm wide by 3 mm thick and a path through which the raw material composition could be flowed into the window. The curing liquid was flowed into the container, and then the container was held lest the liquid should leak. After that, polymerization and molding were performed by heating the resultant in an oven under a nitrogen atmosphere (having an oxygen concentration of 5% or less) at 110°C for 3 hours and then at 160°C for 1 hour. After that, the resultant was cooled to room temperature. Thus, a colorless, transparent plate-like body of a shape suitable for the above-mentioned evaluation methods was obtained. Table 6 shows the results of the evaluations.
It should be noted that when the surface of the product sank and hence was not flat, the surface was flattened by being abraded with emery paper or an abrasive before the product was used in evaluations for optical characteristics.

### Examples 39 to 52

The same operations as those of Examples 25 to 38 were performed except that: 30 parts by mass of 1-adamantyl methacrylate and 45 parts by mass of tricyclodecane dimethanol diacrylate (A-DCP) were used as the compounds (A); and 25 parts by mass of an SR-499 (manufactured by Sartomer Japan Inc.) were used as the compound (B). Table 7 shows the results of the evaluations.

### Examples 53 to 66

The same operations as those of Examples 25 to 38 were performed except that 45 parts by mass of tricyclodecane dimethanol dimethacrylate (DCP) were used instead of tricyclodecane dimethanol diacrylate (A-DCP). Table 8 shows the results of the evaluations.

### Examples 67 to 80

The same operations as those of Examples 25 to 38 were performed except that: only 50 parts by mass of 1-adamantyl methacrylate were used as the compound (A); and 40 parts by mass of an SR-502 (manufactured by Sartomer Japan Inc.) and 10 parts by mass of an SR-399 (manufactured by Sartomer Japan Inc.) were used as the compounds (B). Table 9 shows the results of the evaluations.

### Examples 81 to 94

The same operations as those of Examples 25 to 38 were performed except that: only 50 parts by mass of 1-adamantyl methacrylate were used as the compound (A); and 40 parts by mass of an SR-415 (manufactured by Sartomer Japan Inc.) and 10 parts by mass of an SR-399 (manufactured by Sartomer Japan Inc.) were used as the compounds (B). Table 10 shows the results of the evaluations.

### Examples 95 to 108

The same operations as those of Examples 25 to 38 were performed except that: 30 parts by mass of 1-adamantyl methacrylate and 70 parts by mass of tricyclodecane dimethanol diacrylate (A-DCP) were used as the compounds (A) ; and the compound (B) was not used. Table 11 shows the results of the evaluations.

### Comparative Example 12

The same operations as those of Examples 25 to 38 were performed except that: only 100 parts by mass of 1-adamantyl methacrylate were used as the compound (A); and neither the compound (B) nor the antioxidant (C-2) was used. Table 12 shows the results of the evaluations.

### Comparative Example 13

The same operations as those of Examples 39 to 52 were performed except that neither the compound (B) nor the antioxidant (C-2) was used. Table 12 shows the results of the evaluations.

### Comparative Example 14

The same operations as those of Examples 53 to 66 were performed except that 1 part by mass of (11) a hydroxyl aluminum compound (FS042) was used instead of the antioxidant (C-2) . Table 12 shows the results of the evaluations.

### Comparative Example 15

The same operations as those of Examples 39 to 52 were performed except that 1 part by mass of (12) a vitamin-based compound (vitamin C) was used instead of the antioxidant (C-2). Table 12 shows the results of the evaluations.

### Comparative Example 16

The same operations as those of Examples 39 to 52 were performed except that 1 part by mass of (13) a vitamin E-based compound (Irganox E201) was used instead of the antioxidant (C-2). Table 12 shows the results of the evaluations.

### Comparative Example 17

The same operations as those of Examples 39 to 52 were performed except that: 30 parts by mass of 1-adamantyl methacrylate and 50 parts by mass of tricyclodecane dimethanol dimethacrylate (DCP) were used as the compounds (A); 20 parts by mass of an SR-499 (manufactured by Sartomer Japan Inc.) were used as the compound (B); and the antioxidant (C-2) was not used. Table 12 shows the results of the evaluations.

### Comparative Example 18

The same operations as those of Examples 39 to 52 were performed except that: only 30 parts by mass of 1-adamantyl methacrylate were used as the compound (A) ; 45 parts by mass of an SR-502 (manufactured by Sartomer Japan Inc.) and 25 parts by mass of an SR-399 (manufactured by Sartomer Japan Inc.) were used as the compounds (B); and the antioxidant (C-2) was not used. Table 12 shows the results of the evaluations.

[Table 6]

**Table 6**

| | Example 25 | Example 26 | Example 27 | Example 28 | Example 29 | Example 30 | Example 31 | Example 32 | Example 33 | Example 34 | Example 35 | Example 36 | Example 37 | Example 38 |
|---|---|---|---|---|---|---|---|---|---|---|---|---|---|---|
| Raw material composition (part(s) by mass) | | | | | | | | | | | | | | |
| Compound (A) | | | | | | | | | | | | | | |
| 1-Adamantyl methacrylate (n=1) | 30 | 30 | 30 | 30 | 30 | 30 | 30 | 30 | 30 | 30 | 30 | 30 | 30 | 30 |
| 1,3-Adamantane dimethanol dimethacrylate (n=2) | 45 | 45 | 45 | 45 | 45 | 45 | 45 | 45 | 45 | 45 | 45 | 45 | 45 | 45 |
| Compound (B) | | | | | | | | | | | | | | |
| SR-499 (m=3) | 25 | 25 | 25 | 25 | 25 | 25 | 25 | 25 | 25 | 25 | 25 | 25 | 25 | 25 |
| Antioxidant (C-2) | | | | | | | | | | | | | | |
| (1) Lactone-based compound (HP-138) | 1 | | | | | | 0.5 | | | | | | | |
| (2) Hindered phenol-based compound (BHT) | | 1 | | | | | | | | | | | | |
| (3) Hindered phenol-based compound (Irganox 1076) | | | 1 | | | | 0.5 | 0.5 | | | | | | |
| (4) Hindered phenol-based compound (Irganox 3114) | | | | 1 | 0.5 | | | | | | | | | |
| (5) Hindered phenol-based compound (Sumilizer GS) | | | | | | | | | 0.5 | 0.5 | 0.5 | | | 0.25 |
| (6) Hindered phenol-based compound (Sumilizer GM) | | | | | 0.5 | | | 0.5 | | | | 0.5 | | |
| (7) Hindered phenol-based compound (Adekastab A-80) | | | | | | 1 | | | 0.5 | | | | 0.75 | 0.75 |
| (8) Hindered phenol-based compound (Adekastab A-60) | | | | | | | | | | 0.5 | 0.5 | | | |
| (9) Hindered phenol-based compound (Sumilizer GP) | | | | | | | | | | | | 1 | | |
| (10) Phosphorus-based compound (Adekastab PEP-36) | | | | | | | | | | | | | 0.25 | |
| Results of evaluations | | | | | | | | | | | | | | |
| (1) Presence or absence of cracks after heat history | | | | | | | | | | | | | | |
| After heat history 1 | ○ | ○ | ○ | ○ | ○ | ○ | ○ | ○ | ○ | ○ | ○ | ○ | ○ | ○ |
| After heat history 2 | ○ | × | ○ | ○ | ○ | ○ | ○ | ○ | ○ | ○ | ○ | ○ | ○ | ○ |
| (2) Shape stability (After heat history 1) | ○ | ○ | ○ | ○ | ○ | ○ | ○ | ○ | ○ | ○ | ○ | ○ | ○ | ○ |
| (3) Light transmittance | | | | | | | | | | | | | | |
| Initial total light transmittance (%) | 93 | 93 | 93 | 93 | 93 | 93 | 93 | 93 | 93 | 93 | 93 | 93 | 93 | 93 |
| Amount of reduction in total light transmittance after heat history 1 (%) | 0 | 0 | 0 | 0 | 0 | 0 | 0 | 0 | 0 | 0 | 0 | 0 | 0 | 0 |
| Amount of reduction in total light transmittance after heat history 2(%) | 0 | - | 0 | 0 | 0 | 0 | 0 | 0 | 0 | 0 | 0 | 0 | 0 | 0 |
| (4) Yellowing factor (YI value) | | | | | | | | | | | | | | |
| Initial YI value | 1.6 | 1.6 | 1.6 | 1.6 | 1.6 | 1.6 | 1.6 | 1.6 | 1.6 | 1.6 | 1.6 | 1.6 | 1.6 | 1.6 |
| Amount of increase in YI value after heat history 1 | 0.5 | 0.7 | 0.5 | 0.5 | 0.5 | 0.5 | 0.5 | 0.5 | 0.5 | 0.5 | 0.5 | 0.5 | 0.5 | 0.5 |
| Amount of increase in YI value after heat history 2 | 3 | - | 3 | 3 | 2 | 3 | 2 | 2 | 2 | 2 | 2 | 2 | 2 | 2 |
| (5) Solubility | ○ | ○ | ○ | Δ | Δ | ○ | ○ | ○ | ○ | ○ | ○ | ○ | ○ | ○ |
| (6) Mass reduction amount (After heat history 2) | 0.5 | 1 | 0.6 | 0.6 | 0.5 | 0.5 | 0.5 | 0.5 | 0.5 | 0.5 | 0.5 | 0.6 | 0.5 | 0.5 |

[Table 7]

**Table 7**

| | Example 39 | Example 40 | Example 41 | Example 42 | Example 43 | Example 44 | Example 45 | Example 46 | Example 47 | Example 48 | Example 49 | Example 50 | Example 51 | Example 52 |
|---|---|---|---|---|---|---|---|---|---|---|---|---|---|---|
| Raw material composition (part(s) by mass) | | | | | | | | | | | | | | |
| Compound (A) | | | | | | | | | | | | | | |
| 1-Adamantyl methacrylate (n=1) | 30 | 30 | 30 | 30 | 30 | 30 | 30 | 30 | 30 | 30 | 30 | 30 | 30 | 30 |
| A-DCP (n=2) | 45 | 45 | 45 | 45 | 45 | 45 | 45 | 45 | 45 | 45 | 45 | 45 | 45 | 45 |
| Compound (B) | | | | | | | | | | | | | | |
| SR-499 (m=3) | 25 | 25 | 25 | 25 | 25 | 25 | 25 | 25 | 25 | 25 | 25 | 25 | 25 | 25 |
| Antioxidant (C-2) | | | | | | | | | | | | | | |
| (1) Lactone-based compound(HP-138) | 1 | | | | | | 0.5 | | | | | | | |
| (2) Hindered phenol-based compound (BHT) | | 1 | | | | | | | | | | | | |
| (3) Hindered phenol-based compound (Irganox 1076) | | | 1 | | | | 0.5 | 0.5 | | | | | | |
| (4) Hindered phenol-based compound (Irganox 3114) | | | | 1 | 0.5 | | | | | | | | | |
| (5) Hindered phenol-based compound Sumilizer GS) | | | | | | | | | 0.5 | 0.5 | 0.5 | | | 0.25 |
| (6) Hindered phenol-based compound (Sumilizer GM) | | | | | 0.5 | | | 0.5 | | | | 0.5 | | |
| (7) Hindered phenol-based compound (Adekastab A-80) | | | | | | 1 | | | 0.5 | | | | 0.75 | 0.75 |
| (8) Hindered phenol-based compound (Adekastab A-60) | | | | | | | | | | 0.5 | 0.5 | | | |
| (9) Hindered phenol-based compound (Sumilizer GP) | | | | | | | | | | | | 1 | | |
| (10) Phosphorus-based compound (Adekastab PEP-36) | | | | | | | | | | | | | 0.25 | |
| Results of evaluations | | | | | | | | | | | | | | |
| (1) Presence or absence of cracks after heat history | | | | | | | | | | | | | | |
| After heat history 1 | ○ | ○ | ○ | ○ | ○ | ○ | ○ | ○ | ○ | ○ | ○ | ○ | ○ | ○ |
| After heat history 2 | ○ | × | ○ | ○ | ○ | ○ | ○ | ○ | ○ | ○ | ○ | ○ | ○ | ○ |
| (2) Shape stability (After heat history 1) | ○ | ○ | ○ | ○ | ○ | ○ | ○ | ○ | ○ | ○ | ○ | ○ | ○ | ○ |
| (3) Light transmittance | | | | | | | | | | | | | | |
| Initial total light transmittance (%) | 93 | 93 | 93 | 93 | 93 | 93 | 93 | 93 | 93 | 93 | 93 | 93 | 93 | 93 |
| Amount of reduction in total light transmittance after heat history 1 (%) | 0 | 0 | 0 | 0 | 0 | 0 | 0 | 0 | 0 | 0 | 0 | 0 | 0 | 0 |
| Amount of reduction in total light transmittance after heat history 2(%) | 0.5 | | 0.5 | 0.5 | 0.5 | 0.5 | 0.5 | 0.5 | 0.5 | 0.5 | 0.5 | 0.5 | 0.5 | 0.5 |
| (4) Yellowing factor (YI value) | | | | | | | | | | | | | | |
| Initial YI value | 1.6 | 1.6 | 1.6 | 1.6 | 1.6 | 1.6 | 1.6 | 1.6 | 1.6 | 1.6 | 1.6 | 1.6 | 1.6 | 1.6 |
| Amount of increase in YI value after heat history 1 | 0.5 | 0.7 | 0.5 | 0.5 | 0.5 | 0.5 | 0.5 | 0.5 | 0.5 | 0.5 | 0.5 | 0.5 | 0.5 | 0.5 |
| Amount of increase in YI value after heat history 2 | 3.5 | - | 3.5 | 3.5 | 2.5 | 3.5 | 2.5 | 2.5 | 2.5 | 2.5 | 2.5 | 2.5 | 2.5 | 2.5 |
| (5) solubility | ○ | ○ | ○ | Δ | Δ | ○ | ○ | ○ | ○ | ○ | ○ | ○ | ○ | ○ |
| (6) Mass reduction amount (After heat history 2) | 0.5 | 1 | 0.6 | 0.6 | 0.5 | 0.5 | 0.5 | 0.5 | 0.5 | 0.5 | 0.5 | 0.6 | 0.5 | 0.5 |

[Table 8]

**Table 8**

| | Example 53 | Example 54 | Example 55 | Example 56 | Example 57 | Example 58 | Example 59 | Example 60 | Example 61 | Example 62 | Example 63 | Example 64 | Example 65 | Examples 66 |
|---|---|---|---|---|---|---|---|---|---|---|---|---|---|---|
| Raw material composition (part(s) by mass) | | | | | | | | | | | | | | |
| Compound (A) | | | | | | | | | | | | | | |
| 1-Adamantyl methacrylate (n=1) | 30 | 30 | 30 | 30 | 30 | 30 | 30 | 30 | 30 | 30 | 30 | 30 | 30 | 30 |
| DCP (n=2) | 45 | 45 | 45 | 45 | 45 | 45 | 45 | 45 | 45 | 45 | 45 | 45 | 45 | 45 |
| Compound (B) | | | | | | | | | | | | | | |
| SR-499 (m=3) | 25 | 25 | 25 | 25 | 25 | 25 | 25 | 25 | 25 | 25 | 25 | 25 | 25 | 25 |
| Antioxidant (C-2) | | | | | | | | | | | | | | |
| (1) Lactone-based compound(HP-138) | 1 | | | | | | 0.5 | | | | | | | |
| (2) Hindered phenol-based compound (BHT) | | 1 | | | | | | | | | | | | |
| (3) Hindered phenol-based compound (Irganox 1076) | | | 1 | | | | 0.5 | 0.5 | | | | | | |
| (4) Hindered phenol-based compound (Irganox 3114) | | | | 1 | 0.5 | | | | | | | | | |
| (5) Hindered phenol-based compound (Sumilizer GS) | | | | | | | | | 0.5 | 0.5 | 0.5 | | | 0.25 |
| (6) Hindered phenol-based compound (Sumilizer GM) | | | | | 0.5 | | | 0.5 | | | | 0.5 | | |
| (7) Hindered phenol-based compound (Adekastab A-80) | | | | | | 1 | | | 0.5 | | | | 0.75 | 0.75 |
| (8) Hindered phenol-based compound (Adekastab A-60) | | | | | | | | | | 0.5 | 0.5 | | | |
| (9) Hindered phenol-based compound (Sumilizer GP) | | | | | | | | | | | | 1 | | |
| (10) Phosphorus-based compound (Adekastab PEP-36) | | | | | | | | | | | | | 0.25 | |
| Results of evaluations | | | | | | | | | | | | | | |
| (1) Presence or absence of cracks after heat history | | | | | | | | | | | | | | |
| After heat history 1 | ○ | ○ | ○ | ○ | ○ | ○ | ○ | ○ | ○ | ○ | ○ | ○ | ○ | ○ |
| After heat history 2 | ○ | × | ○ | ○ | ○ | ○ | ○ | ○ | ○ | ○ | ○ | ○ | ○ | ○ |
| (2) Shape stability (After heat history 1) | ○ | ○ | ○ | ○ | ○ | ○ | ○ | ○ | ○ | ○ | ○ | ○ | ○ | ○ |
| (3) Light transmittance | | | | | | | | | | | | | | |
| Initial total light transmittance (%) | 93 | 93 | 93 | 93 | 93 | 93 | 93 | 93 | 93 | 93 | 93 | 93 | 93 | 93 |
| Amount of reduction in total light transmittance after heat history 1 (%) | 0 | 0 | 0 | 0 | 0 | 0 | 0 | 0 | 0 | 0 | 0 | 0 | 0 | 0 |
| Amount of reduction in total light transmittance after heat history 2(%) | 0.5 | - | 0.5 | 0.5 | 0.5 | 0.5 | 0.5 | 0.5 | 0.5 | 0.5 | 0.5 | 0.5 | 0.5 | 0.5 |
| (4) Yellowing factor (YI value) | | | | | | | | | | | | | | |
| Initial YI value | 1.6 | 1.6 | 1.6 | 1.6 | 1.6 | 1.6 | 1.6 | 1.6 | 1.6 | 1.6 | 1.6 | 1.6 | 1.6 | 1.6 |
| Amount of increase in YI value after heat history 1 | 0.5 | 0.7 | 0.5 | 0.5 | 0.5 | 0.5 | 0.5 | 0.5 | 0.5 | 0.5 | 0.5 | 0.5 | 0.5 | 0.5 |
| Amount of increase in YI value after heat history 2 | 3.5 | - | 3.5 | 3.5 | 2.5 | 3.5 | 2.5 | 2.5 | 2.5 | 2.5 | 2.5 | 2.5 | 2.5 | 2.5 |
| (5) Solubility | ○ | ○ | ○ | Δ | Δ | ○ | ○ | ○ | ○ | ○ | ○ | ○ | ○ | ○ |
| (6) Mass reduction amount (After heat history 2) | 0.5 | 1 | 0.6 | 0.6 | 0.5 | 0.5 | 0.5 | 0.5 | 0.5 | 0.5 | 0.5 | 0.6 | 0.5 | 0.5 |

[Table 9]

**Table 9**

| | Example 67 | Example 68 | Example 69 | Example 70 | Example 71 | Example 72 | Example 73 | Example 74 | Example 75 | Example 76 | Example 77 | Example 78 | Example 79 | Example 80 |
|---|---|---|---|---|---|---|---|---|---|---|---|---|---|---|
| Raw material composition (part(s) by mass) | | | | | | | | | | | | | | |
| Compound (A) | | | | | | | | | | | | | | |
| 1-Adamantyl methacrylate (n=1) | 50 | 50 | 50 | 50 | 50 | 50 | 50 | 50 | 50 | 50 | 50 | 50 | 50 | 50 |
| Compound (B) | | | | | | | | | | | | | | |
| SR502 (m=3) | 40 | 40 | 40 | 40 | 40 | 40 | 40 | 40 | 40 | 40 | 40 | 40 | 40 | 40 |
| SR-399 (m=5) | 10 | 10 | 10 | 10 | 10 | 10 | 10 | 10 | 10 | 10 | 10 | 10 | 10 | 10 |
| Antioxidant (C-2) | | | | | | | | | | | | | | |
| (1) Lactone-based compound (HP-138) | 1 | | | | | | 0.5 | | | | | | | |
| (2) Hindered phenol-based compound (BHT) | | 1 | | | | | | | | | | | | |
| (3) Hindered phenol-based compound (Irganox 1076) | | | 1 | | | | 0.5 | 0.5 | | | | | | |
| (4) Hindered phenol-based compound (Irganox 3114) | | | | 1 | 0.5 | | | | | | | | | |
| (5) Hindered phenol-based compound (Sumilizer GS) | | | | | | | | | 0.5 | 0.5 | 0.5 | | | 0.25 |
| (6) Hindered phenol-based compound (Sumilizer GM) | | | | | 0.5 | | | 0.5 | | | | 0.5 | | |
| (7) Hindered phenol-based compound (Adekastab A-80) | | | | | | 1 | | | 0.5 | | | | 0.75 | 0.75 |
| (8) Hindered phenol-based compound (Adekastab A-60) | | | | | | | | | | 0.5 | 0.5 | | | |
| (9) Hindered phenol-based compound (Sumilizer GP) | | | | | | | | | | | | 1 | | |
| (10) Phosphorus-based compound (Adekastab PEP-36) | | | | | | | | | | | | | 0.25 | |
| Results of evaluations | | | | | | | | | | | | | | |
| (1) Presence or absence of cracks after heat history | | | | | | | | | | | | | | |
| After heat history 1 | ○ | ○ | ○ | ○ | ○ | ○ | ○ | ○ | ○ | ○ | ○ | ○ | ○ | ○ |
| After heat history 2 | ○ | × | ○ | ○ | ○ | ○ | ○ | ○ | ○ | ○ | ○ | ○ | ○ | ○ |
| (2) Shape stability (After heat history 1) | ○ | ○ | ○ | ○ | ○ | ○ | ○ | ○ | ○ | ○ | ○ | ○ | ○ | ○ |
| (3) Light transmittance | | | | | | | | | | | | | | |
| Initial total light transmittance (%) | 93 | 93 | 93 | 93 | 93 | 93 | 93 | 93 | 93 | 93 | 93 | 93 | 93 | 93 |
| Amount of reduction in total light transmittance after heat history 1 (%) | 0 | 0 | 0 | 0 | 0 | 0 | 0 | 0 | 0 | 0 | 0 | 0 | 0 | 0 |
| Amount of reduction in total light transmittance after heat history 2 (%) | 0.5 | - | 0.5 | 0.5 | 0.5 | 0.5 | 0.5 | 0.5 | 0.5 | 0.5 | 0.5 | 0.5 | 0.5 | 0.5 |
| (4) Yellowing factor (YI value) | | | | | | | | | | | | | | |
| Initial YI value | 1.6 | 1.6 | 1.6 | 1.6 | 1.6 | 1.6 | 1.6 | 1.6 | 1.6 | 1.6 | 1.6 | 1.6 | 1.6 | 1.6 |
| Amount of increase in YI value after heat history 1 | 0.5 | 0.7 | 0.5 | 0.5 | 0.5 | 0.5 | 0.5 | 0.5 | 0.5 | 0.5 | 0.5 | 0.5 | 0.5 | 0.5 |
| Amount of increase in YI value after heat history 2 | 3.5 | - | 3.5 | 3.5 | 3 | 3.5 | 3 | 3 | 3 | 3 | 3 | 3 | 3 | 3 |
| (5) Solubility | ○ | ○ | ○ | Δ | Δ | ○ | ○ | ○ | ○ | ○ | ○ | ○ | ○ | ○ |
| (6) Mass reduction amount (After heat history 2) | 1 | 1.3 | 1.3 | 1.3 | 0.8 | 1 | 0.8 | 0.8 | 0.8 | 0.8 | 0.8 | 0.8 | 0.8 | 0.8 |

[Table 10]

**Table 10**

| | Example 81 | Example 82 | Example 83 | Example 84 | Example 85 | Example 86 | Example 87 | Example 88 | Example 89 | Example 90 | Example 91 | Example 92 | Example 93 | Example 94 |
|---|---|---|---|---|---|---|---|---|---|---|---|---|---|---|
| Raw material composition (part(s) by mass) | | | | | | | | | | | | | | |
| Compound (A) | | | | | | | | | | | | | | |
| 1-Adamantyl methacrylate (n=1) | 50 | 50 | 50 | 50 | 50 | 50 | 50 | 50 | 50 | 50 | 50 | 50 | 50 | 50 |
| Compound (B) | | | | | | | | | | | | | | |
| SR415 (m=3) | 40 | 40 | 40 | 40 | 40 | 40 | 40 | 40 | 40 | 40 | 40 | 40 | 40 | 40 |
| SR499 (m=3) | 10 | 10 | 10 | 10 | 10 | 10 | 10 | 10 | 10 | 10 | 10 | 10 | 10 | 10 |
| Antioxidant (C-2) | | | | | | | | | | | | | | |
| (1) Lactone-based compound(HP-138) | 1 | | | | | | 0.5 | | | | | | | |
| (2) Hindered phenol-based compound (BHT) | | 1 | | | | | | | | | | | | |
| (3) Hindered phenol-based compound (Irganox 1076) | | | 1 | | | | 0.5 | 0.5 | | | | | | |
| (4) Hindered phenol-based compound (Irganox 3114) | | | | 1 | 0.5 | | | | | | | | | |
| (5) Hindered phenol-based compound (Sumilizer GS) | | | | | | | | | 0.5 | 0.5 | 0.5 | | | 0.25 |
| (6) Hindered phenol-based compound (Sumilizer GM) | | | | | 0.5 | | | 0.5 | | | | 0.5 | | |
| (7) Hindered phenol-based compound (Adekastab A-80) | | | | | | 1 | | | 0.5 | | | | 0.75 | 0.75 |
| (8) Hindered phenol-based compound (Adekastab A-60) | | | | | | | | | | 0.5 | 0.5 | | | |
| (9) Hindered phenol-based compound (Sumilizer GP) | | | | | | | | | | | | 1 | | |
| (10) Phosphorus-based compound (Adekastab PEP-36) | | | | | | | | | | | | | 0.25 | |
| Results of evaluations | | | | | | | | | | | | | | |
| (1) Presence or absence of cracks after heat history | | | | | | | | | | | | | | |
| After heat history 1 | ○ | ○ | ○ | ○ | ○ | ○ | ○ | ○ | ○ | ○ | ○ | ○ | ○ | ○ |
| After heat history 2 | ○ | × | ○ | ○ | ○ | ○ | ○ | ○ | ○ | ○ | ○ | ○ | ○ | ○ |
| (2) Shape stability (After heat history 1) | ○ | ○ | ○ | ○ | ○ | ○ | ○ | ○ | ○ | ○ | ○ | ○ | ○ | ○ |
| (3) Light transmittance | | | | | | | | | | | | | | |
| Initial total light transmittance (%) | 93 | 93 | 93 | 93 | 93 | 93 | 93 | 93 | 93 | 93 | 93 | 93 | 93 | 93 |
| Amount of reduction in total light transmittance after heat history 1 (%) | 0 | ○ | 0 | 0 | 0 | 0 | 0 | 0 | 0 | 0 | 0 | 0 | 0 | 0 |
| Amount of reduction in total light transmittance after heat history 2(%) | 0.5 | - | 0.5 | 0.5 | 0.5 | 0.5 | 0.5 | 0.5 | 0.5 | 0.5 | 0.5 | 0.5 | 0.5 | 0.5 |
| (4) Yellowing factor (YI value) | | | | | | | | | | | | | | |
| Initial YI value | 1.6 | 1.6 | 1.6 | 1.6 | 1.6 | 1.6 | 1.6 | 1.6 | 1.6 | 1.6 | 1.6 | 1.6 | 1.6 | 1.6 |
| Amount of increase in YI value after heat history 1 | 0.5 | 0.7 | 0.5 | 0.5 | 0.5 | 0.5 | 0.5 | 0.5 | 0.5 | 0.5 | 0.5 | 0.5 | 0.5 | 0.5 |
| Amount of increase in YI value after heat history 2 | 3.5 | - | 3.5 | 3.5 | 3 | 3.5 | 3 | 3 | 3 | 3 | 3 | 3 | 3 | 3 |
| (5) Solubility | ○ | ○ | ○ | Δ | Δ | ○ | ○ | ○ | ○ | ○ | ○ | ○ | ○ | ○ |
| (6) Mass reduction amount (After heat history 2) | 1 | 1.3 | 1.3 | 1.3 | 0.8 | 1 | 0.8 | 0.8 | 0.8 | 0.8 | 0.8 | 0.8 | 0.8 | 0.8 |

[Table 11]

**Table 11**

| | Example 95 | Example 96 | Example 97 | Example 98 | Example 99 | Example 100 | Example 101 | Example 102 | Example 103 | Example 104 | Example 105 | Example 106 | Example 107 | Example 108 |
|---|---|---|---|---|---|---|---|---|---|---|---|---|---|---|
| Raw material composition (part(s) by mass) | | | | | | | | | | | | | | |
| Compound (A) | | | | | | | | | | | | | | |
| 1-Adamantyl methacrylate (n=1) | 30 | 30 | 30 | 30 | 30 | 30 | 30 | 30 | 30 | 30 | 30 | 30 | 30 | 30 |
| A-DCP (n=2) | 70 | 70 | 70 | 70 | 70 | 70 | 70 | 70 | 70 | 70 | 70 | 70 | 70 | 70 |
| Compound (B) | | | | | | | | | | | | | | |
| SR-499 (m=3) | | | | | | | | | | | | | | |
| Antioxidant (C-2) | | | | | | | | | | | | | | |
| (1) Lactone-based compound(HP-138) | 1 | | | | | | 0.5 | | | | | | | |
| (2) Hindered phenol-based compound (BHT) | | 1 | | | | | | | | | | | | |
| (3) Hindered phenol-based compound (Irganox 1076) | | | 1 | | | | 0.5 | 0.5 | | | | | | |
| (4) Hindered pl-Aenol-based compound (Irganox 3114) | | | | 1 | 0.5 | | | | | | | | | |
| (5) Hindered phenol-based compound (Sumilizer GS) | | | | | | | | | 0.5 | 0.5 | 0.5 | | | 0.25 |
| (6) Hindered phenol-based compound (Sumilizer GM) | | | | | 0.5 | | | 0.5 | | | | 0.5 | | |
| (7) Hindered phenol-based compound (Adekastab A-80) | | | | | | 1 | | | 0.5 | | | | 0.75 | 0.75 |
| (8) Hindered phenol-based compound (Adekastab A-60) | | | | | | | | | | 0.5 | 0.5 | | | |
| (9) Hindered phenol-based compound (Sumilizer GP) | | | | | | | | | | | | 1 | | |
| (10) Phosphorus-based compound (Adekastab PEP-36) | | | | | | | | | | | | | 0.25 | |
| Results of evaluations | | | | | | | | | | | | | | |
| (1) Presence or absence of cracks after heat history | | | | | | | | | | | | | | |
| After heat history 1 | ○ | ○ | ○ | ○ | ○ | ○ | ○ | ○ | ○ | ○ | ○ | ○ | ○ | ○ |
| After heat history 2 | × | × | × | × | ○ | × | ○ | ○ | ○ | ○ | ○ | ○ | ○ | ○ |
| (2) Shape stability (After heat history 1) | ○ | ○ | ○ | ○ | ○ | ○ | ○ | ○ | ○ | ○ | ○ | ○ | ○ | ○ |
| (3) Light transmittance Initial total light transmittance (%) | 93 | 93 | 93 | 93 | 93 | 93 | 93 | 93 | 93 | 93 | 93 | 93 | 93 | 93 |
| Amount of reduction in total light transmittance after heat history 1 (%) | 0 | 0 | 0 | 0 | 0 | 0 | 0 | 0 | 0 | 0 | 0 | 0 | 0 | 0 |
| Amount of reduction in total light transmittance after heat history 2 (%) | - | - | - | - | 0.5 | - | 0.5 | 0.5 | 0.5 | 0.5 | 0.5 | 0.5 | 0.5 | 0.5 |
| (4) Yellowing factor (YI value) | | | | | | | | | | | | | | |
| Initial YI value | 2.5 | 2.5 | 2.5 | 2.5 | 2 | 2.5 | 2 | 2 | 2 | 2 | 2 | 2.5 | 2 | 2 |
| Amount of increase in YI value after heat history 1 | 0.5 | 0.7 | 0.5 | 0.5 | 0.5 | 0.5 | 0.5 | 0.5 | 0.5 | 0.5 | 0.5 | 0.5 | 0.5 | 0.5 |
| Amount of increase in YI value after heat history 2 | - | - | - | - | 0.5 | - | 0.5 | 0.5 | 0.5 | 0.5 | 0.5 | 0.6 | 0.5 | 0.5 |
| (5) Solubility | ○ | ○ | ○ | Δ | Δ | ○ | ○ | ○ | ○ | ○ | ○ | ○ | ○ | ○ |
| (6) Mass reduction amount (After heat history 2) | 0.5 | 1 | 0.6 | 0.6 | 0.5 | 0.5 | 0.5 | 0.5 | 0.5 | 0.5 | 0.5 | 0.6 | 0.5 | 0.5 |

[Table 12]

**Table 12**

| | Comparative Example 12 | Comparative Example 13 | Comparative Example 14 | Comparative Example 15 | Comparative Example 16 | Comparative Example 17 | Comparative Example 18 |
|---|---|---|---|---|---|---|---|
| Raw material composition (part(s) by mass) | | | | | | | |
| Compound (A) | | | | | | | |
| 1-Adamantyl methacrylate (n=1) | 100 | 30 | 30 | 30 | 30 | 30 | 30 |
| A-DCP (n=2) | | 45 | 45 | 45 | 45 | | |
| DCP (n=2) | | | | | | 50 | |
| Compound (B) | | | | | | | |
| SR-499 (m=3) | | 25 | 25 | 25 | 25 | 20 | |
| SR-502 (m=3) | | | | | | | 45 |
| SR-399 (m=5) Antioxidant (C-2) | | | | | | | 25 |
| (3) Hindered phenol-based compound (Irganox 1076) | | | | | | | |
| (6) Hindered phenol-based compound (Sumilizer GM) | | | | | | | |
| Antioxidant replacement (C'-3) | | | | | | | |
| Hydroxyl aluminum compound (FS042) | | | 1 | | | | |
| Vitamin-based compound (vitamin C) | | | | 1 | | | |
| Vitamin E-based compound (Irganox E201) | | | | | 1 | | |
| Results of evaluations | | | | | | | |
| (1) Presence or absence of cracks after heat history | | | | | | | |
| After heat history 1 | × | ○ | ○ | ○ | ○ | ○ | ○ |
| After heat history 2 | × | × | ○ | × | × | × | ○ |
| (2) Shape stability (After heat history 1) | × | ○ | ○ | ○ | ○ | ○ | ○ |
| (3) Light transmittance | | | | | | | |
| Initial total light transmittance (%) | 93 | 93 | 93 | 93 | 93 | 93 | 93 |
| Amount of reduction in total light transmittance after heat history 1 (%) | - | 0.5 | 0.5 | 0.5 | 0.5 | 0.5 | 0.5 |
| Amount of reduction in total light transmittance after heat history 2 (%) | - | - | - | - | - | - | - |
| (4) Yellowing factor (YI value) | | | | | | | |
| Initial YI value | 1.5 | 1.6 | 1.6 | 3.0 | 1.6 | 1.6 | 1.6 |
| Amount of increase in YI value after heat history 1 | - | 1 | 1 | 2.0 | 1 | 0.5 | 1 |
| Amount of increase in YI value after heat history 2 | - | - | 6 | - | - | - | 7 |
| (5) Solubility | - | - | ○ | - | ○ | - | - |
| (6) Mass reduction amount (After heat history 2) | 0.7 | 1 | 0.8 | 0.8 | 1 | 1 | 1.5 |

As is apparent from the foregoing examples and comparative examples, each of all examples of the invention 3 causes nearly no cracks after the heat history 1 and the heat history 2, is excellent in shape stability, has an excellently stable transparency and a low initial yellowing factor (YI value), and shows an extremely small increase in its YI value even when heated.
In contrast, the comparative examples each free of the antioxidant (C-2) are excellent in initial transparency and yellowing factor (YI value), but Comparative Example 12 free of the compound (B) causes cracks after the heat history 1, and the comparative examples except Comparative Example 14 and Comparative Example 18 cause cracks after the heat history 2. Neither Comparative Example 14 nor Comparative Example 18 causes cracks, but none of the comparative examples has heat resistance enough to resist a solder reflow step because the comparative examples show remarkable increases in their YI values and hence turn yellow.
It should be noted that Examples 26, 40, 54, 68, and 82 each using BHT as the antioxidant (C-2), and Examples 95 to 98 and 100 each free of the compound (B) cause cracks after the heat history 2, but cause no cracks after the heat history 1. In addition, the examples have small yellowing factors because the examples show small increases in their YI values as compared with those of Comparative Examples 13 to 16.
In Examples 95 to 98 and 100, and the comparative examples except Comparative Example 14 and Comparative Example 18, neither the amount of a reduction in total light transmittance after the heat history 2 nor the amount of an increase in YI value is described. This is because none of the amounts could be measured owing to the occurrence of cracks.

Apolymer turns yellow when an adamantane structure turns into a conjugated diene structure upon decomposition of the polymer. That is, a certain radical is captured at the initial stage of the decomposition, and then an oxygen radical such as a peroxy radical at the time of the decomposition is generated. Thus, the decomposition is permanently performed. An antioxidant serves to trap the radical to transform the radical into an inert compound of the oxygen radical. However, the antioxidant for suppressing the decomposition involves, for example, the following possibility. The antioxidant suppresses the decomposition reaction, but has a quinone structure after the reaction, and hence turns into a colored compound.
In contrast, an antioxidant having a high decomposition-suppressing effect and free of coloring is selected in the invention of the application. According to the invention of the application, excellent thermal yellowing resistance is obtained by using the specific antioxidant (C-2) for a resin composition containing the (meth)acrylate compound (A) having a specific structure and including an adamantyl group, and the (meth)acrylate compound (B) having a low molecular weight.

### Example 109 to 116 (invention 4)

30 Parts by mass of 1-adamantyl methacrylate (manufactured by Osaka Organic Chemical Industry Ltd.) and 70 parts by mass of tricyclodecane dimethanol diacrylate (manufactured by Shin-Nakamura Chemical Co., Ltd.: NK ESTER A-DCP) as the compounds (A), 0.5 part by mass of each of the aliphatic compounds (C1) to (C7) shown in Table 13 below as the compound (C-3), 0.5 part by mass of an Irganox 1076 (manufactured by Ciba Specialty Chemicals Inc.) as an antioxidant, and 0.4 part by mass of a PERHEXA HC (manufactured by NOF Corporation) as a polymerization initiator were loaded and mixed. Thus, a raw material compositionwas obtained. The raw material composition was molded by using the molding method A into a shape suitable for the above-mentioned evaluation methods. Table 13 shows the results of the evaluations.

### Examples 117 to 124

The same operations as those of Examples 109 to 116 were performed except that: 30 parts by mass of 1-adamantyl methacrylate and 45 parts by mass of tricyclodecane dimethanol diacrylate (A-DCP) were used as the compounds (A) ; 24 parts by mass of an SR-499 (manufactured by Sartomer Japan Inc.) were used as the compound (B); and no antioxidant was used. Table 14 shows the results of the evaluations.

### Examples 125 to 132

The same operations as those of Examples 117 to 124 were performed except that: 45 parts by mass of tricyclodecane dimethanol dimethacrylate (DCP) were used instead of tricyclodecane dimethanol diacrylate (A-DCP); and 0.5 part by mass of an Irganox 1076 was used as an antioxidant. Table 15 shows the results of the evaluations.

### Examples 133 to 140

The same operations as those of Examples 125 to 132 were performed except that 45 parts by mass of 1, 3-adamantane dimethanol dimethacrylate obtained in Production Example 1 were used instead of 45 parts by mass of tricyclodecane dimethanol dimethacrylate (DCP) as the compound (A). Table 16 shows the results of the evaluations.

### Examples 141 to 148

The same operations as those of Examples 117 to 124 were performed except that: 0.5 part by mass of an Irganox 1076 was used as an antioxidant; 0.4 part by mass of a PEROYL L (manufactured by NOF Corporation) was used as a polymerization initiator; and the molding method B was adopted. Table 17 shows the results of the evaluations.

### Examples 149 to 156

The same operations as those of Examples 109 to 116 were performed except that: only 50 parts by mass of 1-adamantyl methacrylate were used as the compound (A); and 40 parts by mass of an SR-502 (manufactured by Sartomer Japan Inc.) and 10 parts by mass of an SR-399 (manufactured by Sartomer Japan Inc.) were used as the compounds (B). Table 18 shows the results of the evaluations.

### Examples 157 to 164

The same operations as those of Examples 149 to 156 were performed except that 40 parts by mass of an SR-415 (manufactured by Sartomer Japan Inc.) were used instead of the SR-502 as the compound (B). Table 19 shows the results of the evaluations.

### Examples 165 to 172

The same operations as those of Examples 117 to 124 were performed except that: 1.0 part by mass of a PERHEXA HC was used as a polymerization initiator; and the molding method C was adopted. Table 20 shows the results of the evaluations.

### Comparative Example 19

The same operations as those of Examples 117 to 124 were performed except that: 0.5 part by mass of an Irganox 1076 was used as an antioxidant; and the aliphatic compound (C-3) was not used. Table 21 shows the results of the evaluations.

### Comparative Example 20

The same operations as those of Examples 117 to 124 were performed except that: 0.5 part by mass of an Irganox 1076 was used as an antioxidant; and 0.5 part by mass of a higher alcohol A (KALCOL 0898) was used instead of the aliphatic compound (C-3). Table 21 shows the results of the evaluations.

### Comparative Example 21

The same operations as those of Examples 125 to 132 were performed except that the aliphatic compound (C-3) was not used. Table 21 shows the results of the evaluations.

### Comparative Example 22

The same operations as those of Examples 133 to 140 were performed except that the aliphatic compound (C-3) was not used. Table 21 shows the results of the evaluations.

### Comparative Example 23

The same operations as those of Examples 149 to 156 were performed except that the aliphatic compound (C-3) was not used. Table 21 shows the results of the evaluations.

### Comparative Example 24

The same operations as those of Examples 149 to 156 were performed except that 0.5 part by mass of a higher alcohol B (KALCOL 8098) was used instead of the aliphatic compound (C-3). Table 21 shows the results of the evaluations.

[Table 13]

**Table 13**

| | Example 109 | Example 110 | Example 111 | Example 112 | Example 113 | Example 114 | Example 115 | Example 116 |
|---|---|---|---|---|---|---|---|---|
| Raw material composition (part(s) by mass) | | | | | | | | |
| Compound (A) | | | | | | | | |
| 1-Adamantyl methacrylate (n=1) | 30 | 30 | 30 | 30 | 30 | 30 | 30 | 30 |
| A-DCP (n=2) | 70 | 70 | 70 | 70 | 70 | 70 | 70 | 70 |
| Compound (C-3) | | | | | | | | |
| Aliphatic acid metal salt A (DAIMAX ZP) | 0.5 | | | | | | | |
| Aliphatic acid metal salt B (DAIWAX M) | | 0.5 | | | | | | |
| Aliphatic acid metal salt C (DAIWAX M-1) | | | 0.5 | | | | | |
| Aliphatic acid metal salt D (DAIWAX 12Z) | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LUNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | 0.5 |
| Polymerization inhibitor: PERHEXA HC | 0.4 | 0.4 | 0.4 | 0.4 | 0.4 | 0.4 | 0.4 | 0.4 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | A | A | A | A | A | A | A | A |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 0.5 | 0.5 | 0.5 | 0.5 | 0.5 | 0.5 | 0.5 | 0.5 |
| (5) Solubility | Δ | × | Δ | ○ | Δ | ○ | ○ | ○ |
| (6) Releasability | ○ | ○ | ○ | ○ | ○ | ○ | ○ | ○ |

[Table 14]

**Table 14**

| | Example 117 | Example 118 | Example 119 | Example 120 | Example 121 | Example 122 | Example 123 | Example 124 |
|---|---|---|---|---|---|---|---|---|
| Raw material composition (part(s) by mass) | | | | | | | | |
| Compound (A) | | | | | | | | |
| 1-Adamantyl methacrylate (n=1) | 30 | 30 | 30 | 30 | 30 | 30 | 30 | 30 |
| A-DCP (n=2) | 45 | 45 | 45 | 45 | 45 | 45 | 45 | 45 |
| Compound (B) | | | | | | | | |
| SR-499 (m=3) | 25 | 25 | 25 | 25 | 25 | 25 | 25 | 25 |
| Compound (C-3) | | | | | | | | |
| Aliphatic acid metal salt A (DAIWAX ZP) | 0.5 | | | | | | | |
| Aliphatic acid metal salt B (DAIWAX M) | | 0.5 | | | | | | |
| Aliphatic acid metal salt C (DAIWAX M-1) | | | 0.5 | | | | | |
| Aliphatic acid metal salt D (DAIWAX 12Z) | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LUNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | |
| Polymerization inhibitor: PERHEXA HC | 0.4 | 0.4 | 0.4 | 0.4 | 0.4 | 0.4 | 0.4 | 0.4 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | A | A | A | A | A | A | A | A |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 1 | 1 | 1 | 1 | 1 | 1 | 1 | 1 |
| (5) Solubility | Δ | × | Δ | Δ | Δ | ○ | ○ | ○ |
| (6) Releasability | ○ | ○ | ○ | ○ | ○ | ○ | ○ | ○ |

[Table 15]

**Table 15**

| | Example 125 | Example 126 | Example 127 | Example 128 | Example 129 | Example 130 | Example 131 | Example 132 |
|---|---|---|---|---|---|---|---|---|
| Raw material compositior (part(s) by mass) | | | | | | | | |
| Compound (A) | | | | | | | | |
| 1-adamantyl methacrylate (n=1) | 30 | 30 | 30 | 30 | 30 | 30 | 30 | 30 |
| DCP (n=2) | 45 | 45 | 45 | 45 | 45 | 45 | 45 | 45 |
| Compound (B) | | | | | | | | |
| SR-499 (m=3) | 25 | 25 | 25 | 25 | 25 | 25 | 25 | 25 |
| Compound (C-3) | | | | | | | | |
| Aliphatic acid metal salt A (DAIWAX ZP) | 0.5 | | | | | | | |
| Aliphatic acid metal salt E (DAIWAX M) B | | 0.5 | | | | | | |
| Aliphatic acid metal salt C (DAIWAX M-1) | | | 0.5 | | | | | |
| Aliphatic acid metal salt D (DAIWAX 12Z) D | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LUNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | 0.5 |
| Polymerization inhibitor: PERHEXA HC | 0.4 | 0.4 | 0.4 | 0.4 | 0.4 | 0.4 | 0.4 | 0.4 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | A | A | A | A | A | A | A | A |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 1 | 1 | 1 | 1 | 1 | 1 | 1 | 1 |
| (5) Volubility | Δ | × | Δ | Δ | Δ | ○ | ○ | ○ |
| (6) Releasability | ○ | ○ | ○ | ○ | ○ | ○ | ○ | ○ |

[Table 16]

**Table 16**

| | Example 133 | Example 134 | Example 135 | Example 136 | Example 137 | Example 138 | Example 139 | Example 140 |
|---|---|---|---|---|---|---|---|---|
| Raw material composition (part(s) by mass) | | | | | | | | |
| Compound (A) | | | | | | | | |
| 1-Adamantyl methacrylate (n=1) | 30 | 30 | 30 | 30 | 30 | 30 | 30 | 30 |
| 1,3-Adamantane dimethanol dimethacrylate (n=2) | 45 | 45 | 45 | 45 | 45 | 45 | 45 | 45 |
| Compound (B) | | | | | | | | |
| SR-499 (m=3) | 25 | 25 | 25 | 25 | 25 | 25 | 25 | 25 |
| Compound (C-3) | | | | | | | | |
| Aliphatic acid metal salt A (DAIWAX ZP) | 0.5 | | | | | | | |
| Aliphatic acid metal salt B (DAIWAX M) | | 0.5 | | | | | | |
| Aliphatic acid metal salt C (DAIWAX M-1) | | | 0.5 | | | | | |
| Aliphatic acid metal salt D (DAIWAX 12Z) | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LUNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | 0.5 |
| Polymerization inhibitor: PERHEXA HC | 0.4 | 0.4 | 0.4 | 0.4 | 0.4 | 0.4 | 0.4 | 0.4 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | A | A | A | A | A | A | A | A |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 1 | 1 | 1 | 1 | 1 | 1 | 1 | 1 |
| (5) Solubility | Δ | × | Δ | Δ | Δ | ○ | ○ | ○ |
| (6) Releasability | ○ | ○ | ○ | ○ | ○ | ○ | ○ | ○ |

[Table 17]

**Table 17**

| | Example 141 | Example 142 | Example 143 | Example 144 | Example 145 | Example 146 | Example: 147 | Example 148 |
|---|---|---|---|---|---|---|---|---|
| Raw material composition (part(s) by mass) | | | | | | | | |
| Compound (A) | | | | | | | | |
| 1-Adamantyl methacrylate (n=1) | 30 | 30 | 30 | 30 | 30 | 30 | 30 | 30 |
| A-DCP (n=2) | 45 | 45 | 45 | 45 | 45 | 45 | 45 | 45 |
| Compound (B) | | | | | | | | |
| SR-499 (m=3) | 25 | 25 | 25 | 25 | 25 | 25 | 25 | 25 |
| Compound (C-3) | | | | | | | | |
| Aliphatic acid metal salt A (DAIWAY ZP) | 0.5 | | | | | | | |
| Aliphatic acid metal salt B (DAIWAX M) | | 0.5 | | | | | | |
| Aliphatic acid metal salt C (DAIWAX M-1) | | | 0.5 | | | | | |
| Aliphatic acid metal salt D (DAIWAX 12Z) | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LUNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | 0.5 |
| Polymerization inhibitor: PERHEXA HC | 0.4 | 0.4 | 0.4 | 0.4 | 0.4 | 0.4 | 0.4 | 0.4 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | B | B | B | B | B | B | B | B |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 1 | 1 | 1 | 1 | 1 | 1 | 1 | 1 |
| (5) Solubility | Δ | × | Δ | Δ | Δ | ○ | ○ | ○ |
| (6) Releasability | ○ | ○ | ○ | ○ | ○ | ○ | ○ | ○ |

[Table 18]

**Table 18**

| | Example 149 | Example 150 | Example 151 | Example 152 | Example 153 | Example 154 | Example 155 | Example 156 6 |
|---|---|---|---|---|---|---|---|---|
| Raw material composition (part(s) by mass) | | | | | | | | |
| Compound (A) | | | | | | | | |
| 1-Adamantyl methacrylate (n=1) | 50 | 50 | 50 | 50 | 50 | 50 | 50 | 50 |
| Compound (B) | | | | | | | | |
| SR-502 (m=3) | 40 | 40 | 40 | 40 | 40 | 40 | 40 | 40 |
| SR-399 (m=5) | 10 | 10 | 10 | 10 | 10 | 10 | 10 | 10 |
| Compound (C-3) | | | | | | | | |
| Aliphatic acid metal salt A (DAIWAX ZP) | 0.5 | | | | | | | |
| Aliphatic acid metal salt B (DAIWAX M) | | 0.5 | | | | | | |
| Aliphatic acid metal salt C (DAIWAX M-1) | | | 0.5 | | | | | |
| Aliphatic acid metal salt D (DAIWAX 12Z) | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LUNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | 0.5 |
| Polymerization inhibitor: PERHEXA HC | 0.4 | 0.4 | 0.4 | 0.4 | 0.4 | 0.4 | 0.4 | 0.4 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | A | A | A | A | A | A | A | A |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 1 | 1 | 1 | 1 | 1 | 1 | 1 | 1 |
| (5) Solubility | Δ | × | Δ | Δ | Δ | ○ | ○ | ○ |
| (6) Releasability | ○ | ○ | ○ | ○ | ○ | ○ | ○ | ○ |

[Table 19]

**Table 19**

| | Example 157 | Example 158 | Example 159 | Example 160 | Example 161 | Example 162 | Example 163 | Example 164 |
|---|---|---|---|---|---|---|---|---|
| Raw material composition (part(s) by mass) | | | | | | | | |
| Compound (A) | | | | | | | | |
| 1-Adamantyl methacrylate (n=1) | 50 | 50 | 50 | 50 | 50 | 50 | 50 | 50 |
| Compound (B) | | | | | | | | |
| SR-415 (m=3) | 40 | 40 | 40 | 40 | 40 | 40 | 40 | 40 |
| SR-399 (m=5) | 10 | 10 | 10 | 10 | 10 | 10 | 10 | 10 |
| Compound (C-3) | | | | | | | | |
| Aliphatic acid metal salt A (DAIWAX ZP) | 0.5 | | | | | | | |
| Aliphatic acid metal salt B (DAIWAX M) | | 0.5 | | | | | | |
| Aliphatic acid metal salt C (DAIWAX M-1) | | | 0.5 | | | | | |
| Aliphatic acid metal salt D (DAIWAX 12Z) | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LUNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | 0.5 |
| Polymerization inhibitor: PERHEXA HC | 0.4 | 0.4 | 0.4 | 0.4 | 0.4 | 0.4 | 0.4 | 0.4 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | A | A | A | A | A | A | A | A |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| Light transmittance | | | | | | | | |
| Initial total light transmittance (%) | 93 | 93 | 93 | 93 | 93 | 93 | 93 | 93 |
| Amount of reduction in total light transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 1 | 1 | 1 | 1 | 1 | 1 | 1 | 1 |
| (5) Solubility | ○ | × | Δ | Δ | Δ | ○ | ○ | ○ |
| (6) Releasability | ○ | ○ | ○ | ○ | ○ | ○ | ○ | ○ |

[Table 20]

**Table 20**

| | Example 165 | Example 166 | Example 167 | Example 168 | Example 169 | Example 170 | Example 171 | Example 172 |
|---|---|---|---|---|---|---|---|---|
| Raw material composition (part(s) by mass) | | | | | | | | |
| Compound (A) | | | | | | | | |
| 1-Adamantyl methacrylate (n=1) | 30 | 30 | 30 | 30 | 30 | 30 | 30 | 30 |
| A-DCP (n=2) | 45 | 45 | 45 | 45 | 45 | 45 | 45 | 45 |
| Compound (B) | | | | | | | | |
| SR-499 (m=3) | 25 | 25 | 25 | 25 | 25 | 25 | 25 | 25 |
| Compound (C-3) | | | | | | | | |
| Aliphatic acid metal salt A (DAIWAX ZP) | 0.5 | | | | | | | |
| Aliphatic acid metal salt B (DAIWAX M) | | 0.5 | | | | | | |
| Aliphatic acid metal salt C (DAIWAX M-1) | | | 0.5 | | | | | |
| Aliphatic acid metal salt D (DAIWAX 12Z) | | | | 0.5 | | | | |
| Aliphatic acid metal salt E (DAIWAX OZ) | | | | | 0.5 | | | |
| Aliphatic acid A (LUNAC L-98) | | | | | | 0.5 | | |
| Aliphatic acid B (LLNAC O-V) | | | | | | | 0.5 | |
| Aliphatic acid ester (Exepal BS) | | | | | | | | 0.5 |
| Antioxidant: Irganox 1076 | 0.5 | 0.5 | 0.5 | 0.5 | 0.5 | 0.5 | 0.5 | - |
| Polymerization inhibitor: PERHEXA HC | 0.4 | 0.4 | 0.4 | 0.4 | 0.4 | 0.4 | 0.4 | 1.0 |
| Number of carbon atoms of R⁴ of compound (C-3) | 18 | 18 | 18 | 12 | 18 | 12 | 18 | 18 |
| Melting point of compound (C-3) (°C) | 122 | 130 | 75 | 110 | 85 | 45 | 16 | 23 |
| Molding method | C | C | C | C | C | C | C | C |
| Results of evaluations | | | | | | | | |
| (1) Presence or absence of cracks after heat history | ○ | ○ | ○ | ○ | ○ | ○ | ○ | ○ |
| (2) Shape stability evaluation after heat history | ○ | ○ | ○ | ○ | ○ | ○ | ○ | ○ |
| (3) Light transmittance | | | | | | | | |
| Initial total light transmittance (%) | 93 | 93 | 93 | 93 | 93 | 93 | 93 | 93 |
| Amount of reduction in total slight transmittance (%) | 0 | 0 | 0 | 0 | 0 | 0 | 0 | 0 |
| (4) Yellowing factor (YI value) | | | | | | | | |
| Initial YI value | 1.6 | 1.6 | 1.6 | 1.6 | 1.6 | 1.6 | 1.6 | 1.6 |
| Amount of reduction in YI value (Δ250°C YI value) | 1 | 1 | 1 | 1 | 1 | 1 | 1 | 1 |
| (5) Solubility | Δ | × | Δ | Δ | Δ | ○ | ○ | ○ |
| (6) Releasability | ○ | ○ | ○ | ○ | ○ | ○ | ○ | ○ |

[Table 21]

**Table 21**

| | Comparative Example 19 | Comparative Example 20 | Comparative Example 21 | Comparative Example 22 | Comparative Example 23 | Comparative Example 24 |
|---|---|---|---|---|---|---|
| Raw material composition (part(s) by mass) | | | | | | |
| Compound (A) | | | | | | |
| 1-Adamantyl methacrylate (n=1) | 30 | 30 | 30 | 30 | 50 | 50 |
| A-DCP (n=2) | 45 | 45 | | | | |
| DCP (n=2) | | | 45 | | | |
| 1,3-Adamantane dimethanol dimethacrylate (n=2) | | | | 45 | | |
| Compound (B) | | | | | | |
| SR-499 (m=3) | 25 | 25 | 25 | 25 | | |
| SR-502 (m=3) | | | | | 40 | 40 |
| SR-399 (m=5) | | | | | 10 | 10 |
| Compound (C'-3) | | | | | | |
| Higher alcohol A (KALCOL 0898) | | 0.5 | | | | |
| Higher alcohol A (KALCOL 8098) | | | | | | 0.5 |
| Antioxidant: Irganox 1076 | 0.5 | 0.5 | 0.5 | 0.5 | 0.5 | 0.5 |
| Polymerization inhibitor: PERHEXA HC | 0.4 | 0.4 | 0.4 | 0.4 | 0.4 | 0.4 |
| Molding method | A | A | A | A | A | A |
| Results of evaluations | | | | | | |
| (1) Presence or absence of cracks after heat history | ○ | ○ | ○ | ○ | ○ | ○ |
| (2) Shape stability evaluation after heat history | ○ | ○ | ○ | ○ | ○ | ○ |
| (3) Light transmittance | | | | | | |
| Initial total light transmittance (%) | 93 | 93 | 93 | 93 | 93 | 93 |
| Amount of reduction in total light transmittance (%) | 0 | 0 | 0 | 0 | 0.1 | 0.1 |
| (4) Yellowing factor (YI value) | | | | | | |
| Initial YI value | 1.6 | 1.6 | 1.6 | 1.6 | 1.6 | 1.6 |
| Amount of reduction in YI value (Δ250°C YI value) | 1.1 | 1.3 | 1.3 | 1.1 | 1.3 | 1.3 |
| (5) Solubility | ○ | ○ | ○ | ○ | ○ | ○ |
| (6) Releasability | × | × | × | × | × | × |

As is apparent from the foregoing examples and comparative examples, each of all examples of the invention 4 causes no cracks after a heat history, is excellent in shape stability, has an excellently stable transparency and a low initial yellowing factor (YI value), shows an extremely small increase in its YI value even when heated, and is excellent in releasability. Some of the examples each of which uses an aliphatic acid metal salt have low solubility, but no adverse effects are observed on the transparency and the releasability.
In contrast, each of the comparative examples causes no cracks after a heat history and is excellent in shape stability, transparency, and yellowing factor (YI value), but is found to be poor in releasability.
When the aliphatic compound (C-3) is present in the raw material composition (curing liquid) in the invention 4, the composition cures while a component free of a moiety to react with each of the (meth)acrylate compound (A) and the (meth)acrylate compound (B) is excluded at the time of the curing. As a result, the aliphatic compound (C-3) is unevenly distributed between a mold and the cured product. The aliphatic compound (C-3) may effectively serve as a mold release agent when the cured product is taken out of the mold because the compound is constructed of a fat and oil component.

The compound names and chemical formulae of the raw materials and the polymerization initiators used in the respective examples and comparative examples are as shown below.

### Compound (A)

### (1) A-DCP: tricyclodecane dimethanol diacrylate (manufactured by Shin-Nakamura Chemical Co., Ltd.)

Compound name: tricylco[5.2.1.0(2,6)]decane-3,8 (alternatively, 3,9 or 4,8)-diyldimethyl diacrylate

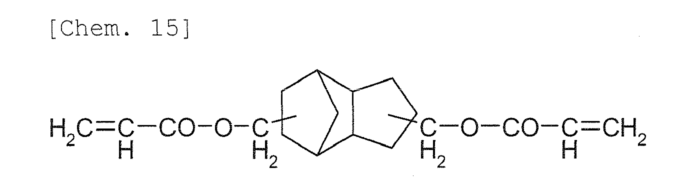

(2) DCP: tricyclodecane dimethanol dimethacrylate (manufactured by Shin-Nakamura Chemical Co., Ltd.)
Compound name: tricyclo[5.2.1.0(2,6)]decane-3,8 (alternatively, 3,9 or 4,8)-diyldimethyl dimethacrylate

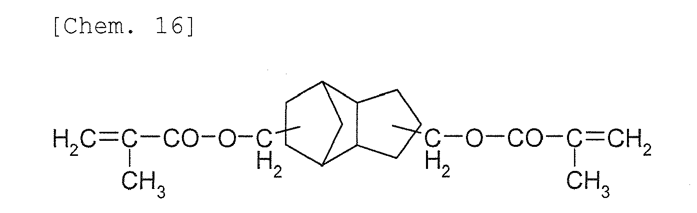

### Compound (B)

### (1) SR-499: ethoxylated (6) trimethylolpropane triacrylate (manufactured by Sartomer Japan Inc., CAS. 28961-43-5, existing chemical substance 7-775, average molecular weight: 560)

Compound name: 8-[7-(acryloyloxy)-2,5-dioxaheptane]-8-ethyl-3,6,10,13-tetrape ntadecane-1,15-diyl diacrylate

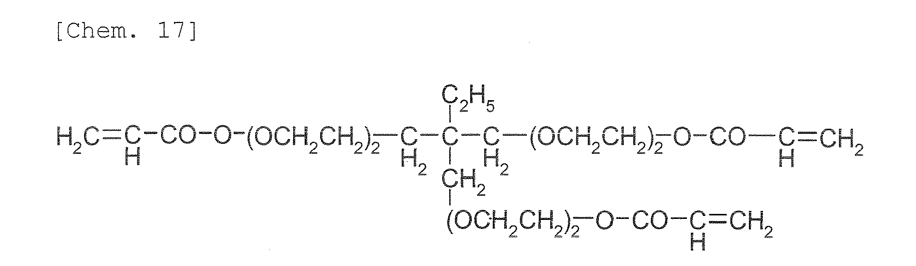

### (2): SR-399: dipentaerythritol pentaacrylate (manufactured by Sartomer Japan Inc.), average molecular weight: 525)

Compound name: 2-(acryloyloxy)methyl-2-({2,2-bis[(acryloyloxy)methyl)-3-hydro xypropane-1-yl]oxy}methylpropane-1,3-diyl diacrylate

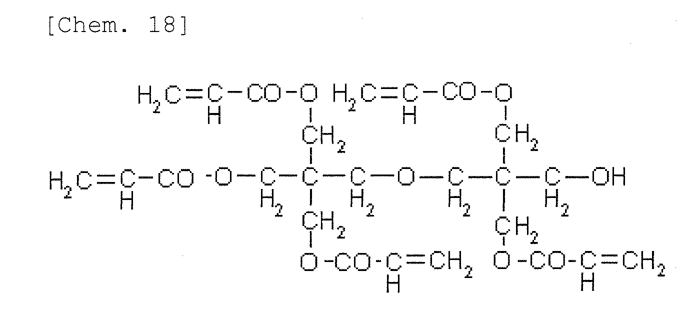

### (3) SR-502: ethoxylated (9) trimethylolpropane triacrylate (manufactured by Sartomer Japan Inc., average molecular weight: 692)

Compound name: 11-[10-(acryloyloxy)-2,5,8-trioxadecane-1-yl]-11-ethyl-3,6,9,1 3,16,19-hexaoxahenicosane-1,21-diyl diacrylate

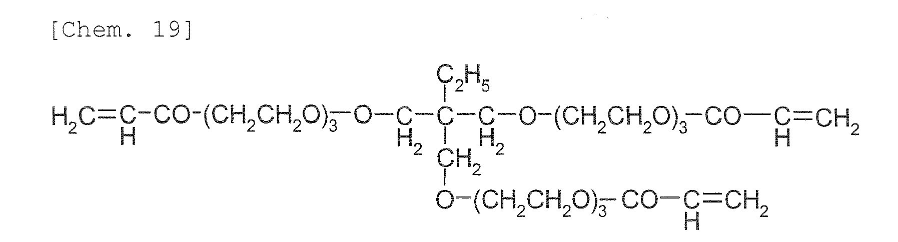

### (4) SR-415: ethoxylated (20) trimethylolpropane triacrylate (manufactured by Sartomer Japan Inc., average molecular weight: 1,176)

Compound name: 20-ethyl-20-(21-oxo-2,5,8,11,14,17,20-heptaoxatricos-22-enyl)-3, 6, 9, 12, 15, 18, 22, 25, 28, 31, 34, 37-dodecaoxanonatriacontane-1,39 -diyl diacrylate

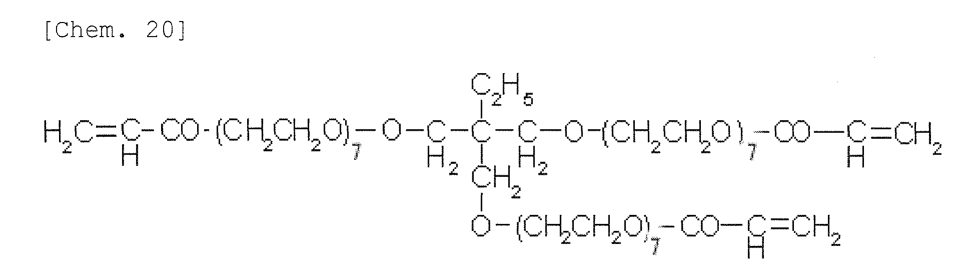

### Polymerization initiator

### (1) PERHEXA HC (manufactured by NOF CORPORATION) Compound name: 1,1-di(t-hexylperoxy)cyclohexane

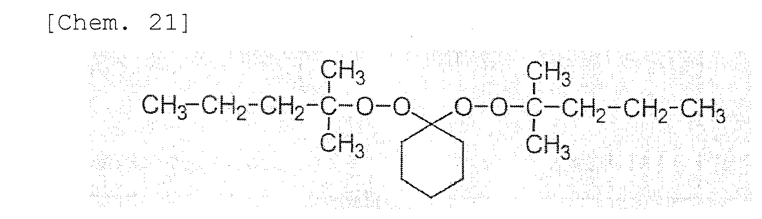

### (2) PEROYL L (manufactured by NOF CORPORATION) Compound name: dilauroyl peroxide

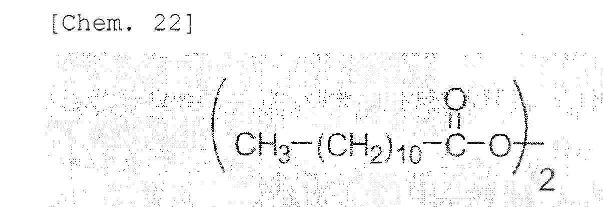

Table 22 shows the trade name, compound name, and structural formula of the silane-based (meth)acrylate compound (C-1).

### [Table 22]

**Table 22**

| Trade name | Compound name | Structural formula, |
|---|---|---|
| KBM-503 | 3-(Trimethoxysilyl)propyl methacrylate | 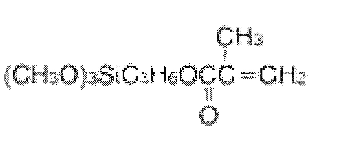 |
| KBE-502 | 3-(Dimethoxymethylsilyl)pro pyl methacrylate | 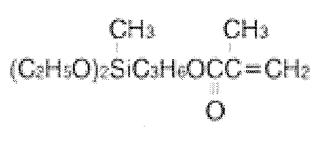 |
| KBM-5103 | 3-(Trimethoxysilyl)propyl acrylate | 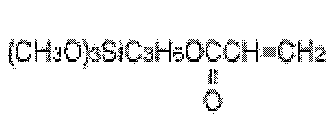 |

In addition, Table 23 and Table 24 show the compound names, chemical formulae, and the like of the antioxidant (C-2) and the compound (C'-2) analogous to the antioxidant.

### [Table 23]

**Table 23**

| Abbreviation and trade name of compound | Compound name | Structural formula | Molecular weight | Manufacturer /selling agency |
|---|---|---|---|---|
| (1) Lactone-based compound (HP-136) | (Note 1) | 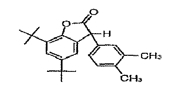 | 351 | Ciba Specialty Chemicals Inc. |
| (2) Hindered phenol-based compound (BHT) | 2,6-Bis(1,1-dimethylethyl)-4-met hylphenol | 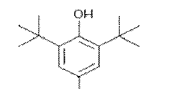 | 220 | Takeda Pharmaceutical Co., Ltd. |
| (3) Hindered phenol-based compound (Irganox 1076) | n-Octadecyl 3-(4'-hydroxy-3',5'-di-tert-buty Iphenyl)propionate | 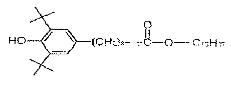 | 531 | Ciba Specialty Chemicals Inc. |
| (4) Hindered phenol-based compound (Irganox 3114) | 1,3,5-Tris(3,5-di-tert-butyl-4-h ydroxybenzyl)-1,3,5-triazine-2,4 , 6(1H,3H,5H)-trione | 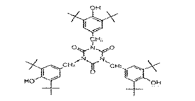 | 784 | Ciba Specialty Chemicals Inc. |
| (5) Hindered phenol-based compound (Sumilizer GS) | 2-[1-(2-Hydroxy-3,5-di-tert-pent ylphenyl)ethyl]-4,6-di-tert-pent ylphenyl acrylate | 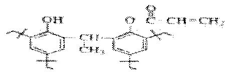 | 410 | Sumitomo Chemical Co., Ltd. |
| (6) Hindered phenol-based compound (Sumilizer GM) | 2-tert-butyl-6-(3-tert-butyl-2-h ydroxy-5-methylbenzyl)-4-methylp henyl acrylate | 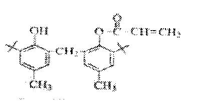 | 382 | Sumitomo Chemical Co., Ltd. |

| | | | | |
|---|---|---|---|---|
| (Note 1) A product of a reaction between 3-hydroxy-5,7-di-tert-butyl-furan-2-one and o-xylene | | | | |

[Table 24]

**Table 24**

| Abbreviation and trade name of compound | Compound name | Structural formula | Molecular weight | Manufacturer/selling agency |
|---|---|---|---|---|
| (7) Hindered phenol-based compound (Adekastab A-80) | 3,9-Bis{2-[3-(3-t-butyl-4-hydroxy-5-methylphenyl)propionyloxy]-1,1-dimethylethyl}-2,4,8,10-tetraoxaspiro[5,5]undecane | 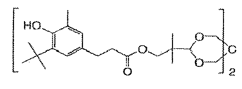 | 741 | ADEKA CORPORATION |
| (8) Hindered phenol-based compound (Adekastab A-60) | Tetrakis[methylene-3-(3',5'-di-tert-butyl-4'-hydroxyphenyl)propionate]methane | 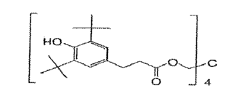 | 1178 | ADEKA CORPORATION |
| (9) Hindered phenol-based compound (Sumilizer GP) | 6-[3-(3-t-Butyl-4-hydroxy-5-methyl)propoxy]-2,4,8,10-tetra-t-butyldibenz[d,f][1,3,2]-dioxaphosphepine | 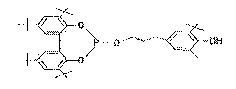 | 662 | Sumitomo Chemical Co., Ltd. |
| (10) Phosphorus-containing compound (Adekastab PHP-36) | Bis(2,6-di-t-butyl-4-methylphenyl)pentaerythritol diphosphite | 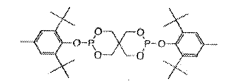 | 633 | ADEKA CORPORATION |
| (11) Hydroxylamine compound (FS042) | (Note 2) | 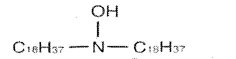 | 537 | Ciba Specialty Chemicals Inc. |
| (12) Vitamin-based compound (vitamin C) | (R)-3,4-Dihydroxy-5-((S)-1,2-dihydroxyethyl)furan-2(5H)-one | 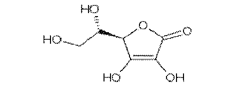 | 176 | Eiken Shoji Co., Ltd. |
| (13) Vitamin E-based compound (IRGANOX: E201) | 3,4-Dihydro-2,5,7,8-tetramethyl-2-(4,8,12-trimethyltridecyl)-2H-benzopyran-6-ol | 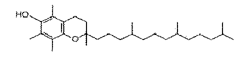 | 431 | Ciba Specialty Chemicals Inc. |

| | | | | |
|---|---|---|---|---|
| (Note 2) The compound is an oxidation product of an alkylamine using reductive beef tallow as a raw material, and a structural formula for its main component is shown. | | | | |

Further, Table 25 shows the compound name, chemical formula, and the like of the aliphatic compound (C-3).

### [Table 25]

**Table 25**

| Abbreviation and trade name of compound | Compound name | Chemical formula | Number of carbon atoms of R⁴ | Melting point (°C) | Remark |
|---|---|---|---|---|---|
| (C1) Aliphatic acid metal salt A (DAIWAX ZP) | Zinc stearate | (C₁₇H₃₅COO) ₂Zn | 18 | 122 | |
| (C2) Aliphatic acid metal salt B (DAIWAX M) | Magnesium stearate | (C₁₇H₃₅COO) ₂Mg | 18 | 130 | Metal content: 4.2% or less |
| (C3) Aliphatic acid metal salt C (DAIWAX M-1) | Magnesium stearate | (C₁₇H₃₅COO) ₂Mg | 18 | 75 | Metal content: 2.5% or less |
| (C4) Aliphatic acid metal salt D (DAIWAX 12Z) | Zinc laurate | (C₁₁H₂₃COO)₂Zn | 12 | 110 | |
| (C4) Aliphatic acidmetal salt E (DAIWAX OZ) | Zinc oleate | (C₁₇H₃₃COO)₂Zn | 18 | 85 | A double bond exists. |
| (C5) Aliphatic acid A (LUNAC L-98) | Lauric acid | C₁₁H₂₃COOH | 12 | 45 | |
| (C6) Aliphatic acid B (LUNAC O-V) | Oleic acid | C₁₇H₃₃COOH | 18 | 16 | A double bond exists. |
| (C7) Aliphatic acid ester (Exepal B5) | Butyl stearate | C₁₇H₃₅COOC₄H₉ | 18 | 23 | |
| (C8) Higher alcohol A (KALCOL 0898) | Octyl alcohol | C₈H₁₇OH | 8 | -16 | |
| (C9) Higher alcohol A (KALCOL 8098) | Stearyl alcohol | C₁₈H₃₇OH | 18 | 58 | |

### Industrial Applicability

An excellent resin for an optical component that has excellent transparency, causes no cracks, and is stable against heat without causing yellowing is obtained from the resin composition of the present invention. Further, a resin for an optical component having a low coefficient of thermal expansion, a low water content, excellent shape stability, excellent mold releasability, and excellent adhesiveness with a coating material that suppresses surface reflection and improves a transmittance can be produced from the composition, and is suitably used in an optical component or the like.

## Claims

1. A raw material composition used for a resin for an optical component, comprising:
a (meth)acrylate compound (A) represented by the following general formula (I); and
a (meth)acrylate compound (B) represented by the following general formula (II): 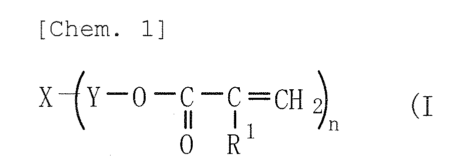 wherein X represents a polycyclic, aliphatic hydrocarbon group, an aromatic hydrocarbon group, or a monocyclic, aliphatic hydrocarbon group, Y's each independently represent a direct bond, an alkylene group having 1 to 4 carbon atoms, or an oxyalkylene group having 1 to 4 carbon atoms, R¹'s each independently represent a hydrogen atom or a methyl group, and n represents an integer of 1 to 4; 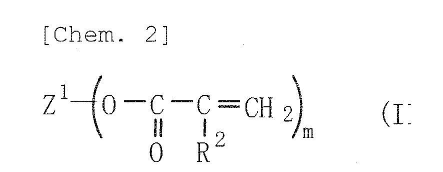 wherein Z¹ represents an acyclic hydrocarbon group which has 5 to 30 carbon atoms and which may include an ether bond, and/or an oxyalkylene group represented by -R³(OR³) k- wherein R³ represents an organic substituent including a linear alkylene group having 1 to 4 carbon atoms, and k represents an integer of 1 to 20, R²'s each independently represent a hydrogen atom or a methyl group, and m represents an integer of 1 to 8.

2. The raw material composition used for a resin for an optical component according to claim 1, wherein the (meth) acrylate compound (B) comprises a compound represented by the following general formula (III) or the following general formula (IV): 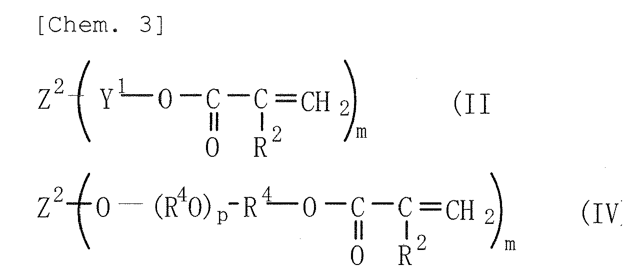 wherein Z²'s represent one or more kinds of organic groups selected from a linear, aliphatic hydrocarbon group which has 1 to 30 carbon atoms and which may include ether, a branched, aliphatic hydrocarbon group which has 3 to 30 carbon atoms and which may include an ether bond, a monocyclic or polycyclic, aliphatic hydrocarbon group, and an aromatic hydrocarbon group, Y¹ represents an acyclic hydrocarbon group which has 5 to 30 carbon atoms and which may include an ether bond, R⁴'s each independently represent an alkylene group having 1 to 4 carbon atoms, p represents an integer of 2 to 20, and R² and m each have the same meaning as meaning in the foregoing formula.

3. The raw material composition used for a resin for an optical component according to claim 2, wherein Y¹ of the (meth)acrylate compound (B) represented by the general formula (III) represents an alkylene group represented by - (CH₂) r- or - (CH₃CH) r- wherein r represents an integer of 5 to 30, or a propylene group represented by -(CR⁶-CR⁷) q- wherein one of R⁶ and R⁷ represents a hydrogen atom and the other represents a methyl group, and q represents an integer of 2 to 15.

4. The raw material composition used for a resin for an optical component according to claim 1, wherein:
(1) the composition contains the (meth) acrylate compounds (A) represented by the general formula (I) and the (meth)acrylate compound (B) represented by the general formula (II);
(2) a ratio of a total amount of a compound wherein n represents 2 to 4 in the (meth) acrylate compounds (A) represented by the general formula (I) and the (meth) acrylate compound (B) to a compound wherein n represents 1 in the (meth) acrylate compounds (A) represented by the general formula (I) is 55 to 0 mass%:45 to 100 mass%; and
(3) the (meth)acrylate compound (B) has a mass average molecular weight of 140 to 2,500.

5. The raw material composition used for a resin for an optical component according to claim 1, wherein:
(1) the (meth)acrylate compounds (A) contain at least one (meth)acrylate compound wherein X represents an adamantyl group;
(2) a ratio between a compound wherein n represents 1 and a compound wherein n represents 2 to 4 in the (meth) acrylate compounds (A) represented by the general formula (I) is 50 to 0 mass%:50 to 100 mass%;
(3) the (meth)acrylate compound (B) has a mass average molecular weight of 140 to 2,500; and
(4) a ratio between the (meth)acrylate compounds (A) and the (meth)acrylate compound (B) is 60 to 100 mass%:40 to 0 mass%.

6. The raw material composition used for a resin for an optical component according to claim 5, wherein 20 to 100 mass% of the (meth)acrylate compounds (A) comprise the (meth)acrylate compound having an adamantyl group.

7. The raw material composition used for a resin for an optical component according to claim 5, further comprising 0.01 to 10 parts by mass of an antioxidant with respect to 100 parts by mass of a total amount of the (meth)acrylate compounds (A) and the (meth)acrylate compound (B).

8. The raw material composition used for a resin for an optical component according to claim 1, wherein:
the composition contains the (meth)acrylate compounds (A) represented by the general formula (I), the (meth) acrylate compound (B) represented by the general formula (II), and a silane-based (meth) acrylate compound (C-1) represented by the following general formula (V);
(1) the (meth)acrylate compounds (A) contain at least one (meth)acrylate compound wherein X represents an adamantyl group;
(2) the (meth)acrylate compound (B) has a mass average molecular weight of 140 to 2,500; and
(3) a ratio "(meth)acrylate compounds (A) : (meth)acrylate compound (B) : silane-based (meth) acrylate compound (C-1)" is 40 to 99 mass%:60 to 0 mass% : 1 to 40 mass%: 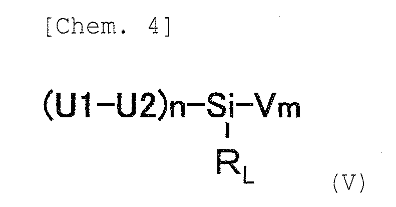 wherein U1 represents an acryloxy group CH₂=CH-CO-O- or amethacryloxy group CH₂=C(CH₃)-CO-O-, U2 represents a single bond, a hydrocarbon group having 1 to 10 carbon atoms, or an oxyalkylene group represented by -(-O-R⁰-)ₚ- wherein R⁰ represents a hydrocarbon group having 1 to 4 carbon atoms, and p represents an integer of 2 to 10, R represents a methyl group or an ethyl group, V represents an alkoxy group having 1 to 5 carbon atoms or a hydroxy group, L represents 0 or 1, m and n each represent an integer of 1 to 4, and L+n+m=4.

9. The raw material composition used for a resin for an optical component according to claim 8, wherein 20 to 100 mass% of the (meth)acrylate compounds (A) comprise the (meth)acrylate compound having an adamantyl group.

10. The raw material composition used for a resin for an optical component according to claim 8, wherein a ratio between a compound wherein n represents 1 and a compound wherein n represents 2 to 4 in the (meth) acrylate compounds (A) represented by the general formula (I) is 50 to 0 mass%:50 to 100 mass%.

11. The raw material composition used for a resin for an optical component according to claim 8, wherein m in the (meth) acrylate compound (B) represented by the general formula (II) represents an integer of 4 to 8, Z¹ has a molecular weight of 400 or less, and Z¹ contains an organic group except the acyclic hydrocarbon group which has 5 to 30 carbon atoms and which may include an ether bond, and the oxyalkylene group represented by -R³ (OR³) k-wherein R³ represents an organic substituent including a linear alkylene group having 1 to 4 carbon atoms; and k represents an integer of 1 to 20 at 15 to 50 mass%.

12. The raw material composition used for a resin for an optical component according to claim 8, further comprising 0.01 to 10 parts by mass of an antioxidant with respect to 100 parts by mass of a total amount of the (meth) acrylate compounds (A), the (meth)acrylate compound (B), and the silane-based (meth)acrylate compound (C-1).

13. The raw material composition used for a resin for an optical component according to claim 1, wherein:
the composition contains the (meth)acrylate compounds (A) represented by the general formula (I), the (meth)acrylate compound (B) represented by the general formula (II), and at least one kind of an antioxidant (C-2) selected from a lactone-based antioxidant and a hindered phenol-based antioxidant;
(1) the (meth)acrylate compounds (A) contain at least one (meth)acrylate compound wherein X represents an adamantyl group;
(2) the (meth)acrylate compound (B) has a mass average molecular weight of 140 to 2,500;
(3) a ratio between the (meth) acrylate compounds (A) and the (meth)acrylate compound (B) is 40 to 100 mass%: 60 to 0 mass%; and
(4) a content of the antioxidant (C-2) is 0.01 to 5 parts by mass with respect to 100 parts by mass of a total amount of the (meth)acrylate compounds (A) and the (meth)acrylate compound (B).

14. The raw material composition used for a resin for an optical component according to claim 13, wherein 20 to 100 mass% of the (meth)acrylate compounds (A) comprise the (meth)acrylate compound having an adamantyl group.

15. The raw material composition used for a resin for an optical component according to claim 13, wherein a ratio between a compound wherein n represents 1 and a compound wherein n represents 2 to 4 in the (meth) acrylate compounds (A) represented by the general formula (I) is 50 to 0 mass% : 50 to 100 mass%.

16. The raw material composition used for a resin for an optical component according to claim 13, wherein m in the (meth) acrylate compound (B) represented by the general formula (II) represents an integer of 4 to 8, Z¹ has a molecular weight of 400 or less, and Z¹ contains an organic group except the acyclic hydrocarbon group which has 5 to 30 carbon atoms and which may include an ether bond, and the oxyalkylene group represented by -R³(OR³)k-wherein R³ represents an organic substituent including a linear alkylene group having 1 to 4 carbon atoms, and k represents an integer of 1 to 20 at 15 to 50 mass%.

17. The raw material composition used for a resin for an optical component according to claim 13, wherein the antioxidant (C-2) further contains a phosphorus-based antioxidant.

18. The raw material composition used for a resin for an optical component according to claim 13, wherein the lactone-based antioxidant as the antioxidant (C-2) has a molecular weight in a range of 300 to 1,500.

19. The raw material composition used for a resin for an optical component according to claim 13, wherein the hindered phenol-based antioxidant as the antioxidant (C-2) has a molecular weight in a range of 300 to 1,500.

20. The raw material composition used for a resin for an optical component according to claim 1, wherein:
the composition contains the (meth)acrylate compounds (A) represented by the general formula (I), the (meth) acrylate compound (B) represented by the general formula (II), and an aliphatic compound (C-3) represented by the following general formula (VI);
(1) the (meth)acrylate compounds (A) contain at least one (meth)acrylate compound wherein X represents an adamantyl group;
(2) the (meth) acrylate compound (B) has a mass average molecular weight of 140 to 2,500;
(3) a ratio between the (meth) acrylate compounds (A) and the (meth)acrylate compound (B) is 40 to 100 mass%: 60 to 0 mass%; and
(4) a content of the aliphatic compound (C-3) is 0.01 to 10 parts by mass with respect to 100 parts by mass of a total amount of the (meth) acrylate compounds (A) and the (meth) acrylate compound (B) : 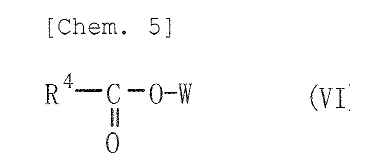 wherein R⁴ represents an aliphatic hydrocarbon group having 6 to 30 carbon atoms, and W represents a hydrogen atom, a metal atom, or a hydrocarbon group having 1 to 8 carbon atoms.

21. The raw material composition used for a resin for an optical component according to claim 20, wherein 20 to 100 mass% of the (meth)acrylate compounds (A) comprise the (meth)acrylate compound having an adamantyl group.

22. The raw material composition used for a resin for an optical component according to claim 20, wherein a ratio between a compound wherein n represents 1 and a compound wherein n represents 2 to 4 in the (meth) acrylate compounds (A) represented by the general formula (I) is 50 to 0 mass%:50 to 100 mass%.

23. The raw material composition used for a resin for an optical component according to claim 20, wherein m in the (meth) acrylate compound (B) represented by the general formula (II) represents an integer of 4 to 8, Z¹ has a molecular weight of 400 or less, and Z¹ contains an organic group except the acyclic hydrocarbon group which has 5 to 30 carbon atoms and which may include an ether bond, and the oxyalkylene group represented by -R³(OR³)k-wherein R³ represents an organic substituent including a linear alkylene group having 1 to 4 carbon atoms, and k represents an integer of 1 to 20 at 15 to 50 mass%.

24. The raw material composition used for a resin for an optical component according to claim 20, wherein the aliphatic compound (C-3) has a melting point in a range of -40 to 140°C.

25. The raw material composition used for a resin for an optical component according to claim 20, wherein W of the aliphatic compound (C-3) represents a hydrogen atom, and R⁴ thereof represents an aliphatic hydrocarbon group having 6 to 20 carbon atoms.

26. The raw material composition used for a resin for an optical component according to claim 20, wherein W of the aliphatic compound (C-3) represents a metal atom, and R⁴ thereof represents an aliphatic hydrocarbon group having 6 to 18 carbon atoms.

27. The raw material composition used for a resin for an optical component according to claim 20, wherein W of the aliphatic compound (C-3) represents a hydrocarbon group, and a total number of carbon atoms of the hydrocarbon groups represented by R⁴ and W thereof is 7 to 30.

28. The raw material composition used for a resin for an optical component according to claim 20, further comprising 0.01 to 10 parts by mass of an antioxidant with respect to 100 parts by mass of the total amount of the (meth)acrylate compounds (A) and the (meth)acrylate compound (B).

29. A resin for an optical component, which is obtained by polymerizing the raw material composition used for a resin for an optical component according to any one of claims 1, 4, 5, 8, 13, and 20.

30. An optical component, which is obtained by molding the resin for an optical component according to claim 29.
